# EUROPEAN PATENT APPLICATION

(11) **EP 4 653 994 A1**
(43) Date of publication of application: **26.11.2025**
(21) Application number: 25176014.6
(22) Date of filing: 13.05.2025
(51) Int. Cl.: G06F 3/04842, H04N 21/414, H04N 21/436, H04N 21/472, H04N 21/214

(54) **SYSTEMS AND METHODS FOR MANAGING, SELECTING, AND COMMUNICATING VEHICLE-BASED MEDIA PRESENTATIONS**

(30) Priority: 24.05.2024 US 202418673659
(71) Applicant: Honeywell International Inc., Charlotte, NC 28202 (US)
(72) Inventor: CASTANEDA SEGURA, Nayeli A., Charlotte, 28202 (US); ELIAS, Niteesh, Charlotte, 28202 (US)
(74) Representative: Haseltine Lake Kempner LLP

(57) **Abstract**

Embodiments of the present disclosure provide systems and methods for managing, selecting, and communicating vehicle-based media presentations. In one embodiment, a method includes receiving media data comprising one or more of: (i) one or more songs, (ii) one or more advertisements, and (iii) one or more announcements; displaying, via a user interface, a plurality of selectable category icons representative of a plurality of data categories for the media data, the plurality of data categories comprising (a) a song category, (b) an advertisement category, and (c) an announcement category; receiving a control signal that initiates a media presentation; adjusting a location of the plurality of selectable category icons on the user interface based at least in part on receiving the control signal that initiates the media presentation; and outputting the media presentation based at least in part on receiving the control signal that initiates the media presentation.

## Description

### TECHNICAL FIELD

Embodiments of the present disclosure generally relate to the field of transportation, and specifically to systems and methods for managing, selecting, and communicating vehicle-based media presentations.

### BACKGROUND

Some vehicles may include media devices that enable media playback throughout the vehicle. For example, some passenger aircraft may include a media player that enables flight crew members to start and stop preloaded audio tracks. In some examples, the operation of such systems may involve the use of a flash memory card that includes one or more songs to be played throughout an aircraft. A content curator may create a playlist, and multiple flash memory cards storing the playlist may be produced for multiple aircraft. Maintenance staff members may then be tasked with installing the flash memory cards at each aircraft. In some examples, the installation of the flash memory card may be relatively labor intensive. For example, a maintenance technician may be required to remove one or more panels, install the flash card, test the flash card, and reinstall the one or more panels. Additionally, such installation procedures must be performed at each aircraft of a fleet, which may multiply associated labor and material costs. Moreover, such media systems do not provide flight crew members with the ability to control or customize the audio experience. This limitation may become particularly apparent during boarding procedures, where the repetitive playback of the same songs leads to poor user experience for both passengers and crew members.

### BRIEF SUMMARY

In accordance with a first aspect of the disclosure, a method is provided. In some embodiments, the method is executable by one or more computing devices embodied in hardware, software, firmware, and/or any combination thereof as described herein. In some examples, the method may include receiving, from a user device and by one or more processors of a media control device of a vehicle, media data comprising one or more of: (i) one or more songs, (ii) one or more advertisements, and (iii) one or more announcements; displaying, via a portion of a first region of the user interface of the media control device, a plurality of selectable category icons representative of a plurality of data categories for the media data, the plurality of data categories comprising (a) a song category, (b) an advertisement category, and (c) an announcement category; receiving a control signal that initiates a media presentation, the media presentation based at least in part on the media data; adjusting a location of the plurality of selectable category icons on the user interface from the portion of the first region of the user interface to a portion of a second region of the user interface based at least in part on receiving the control signal that initiates the media presentation; and outputting, to one or more media presentation devices, the media presentation based at least in part on receiving the control signal that initiates the media presentation.

In some examples, the method further includes displaying the plurality of selectable category icons via the portion of the second region based at least in part on receiving the control signal. In some examples, the method further includes displaying an indication of the media presentation via a portion of a third region of the user interface based at least in part on receiving the control signal, wherein the second region of the user interface comprises a first half of the user interface and the third region of the user interface comprises a second half of the user interface.

In some examples, the method further includes displaying, via a second portion of the second region, a plurality of selectable presentation icons corresponding to a selected category icon of the plurality of selectable category icons. In some examples, receiving the media data from the user device comprises receiving the media data via a secure communication network associated with the vehicle. In some examples, the user device may include (i) a wearable device, (ii) a tablet, or (iii) a cell phone. In some examples, the control signal may be received from the user device operated by a first occupant of the vehicle.

In some examples, the method further includes receiving a second control signal from a second user device operated by a second occupant of the vehicle, wherein the second control signal initiates a second media presentation. In some examples, the first occupant of the vehicle is a crew member and the second occupant of the vehicle is a pilot. In some examples, the control signal is received from the user interface of the media control device.

In some examples, receiving the control signal that initiates the media presentation is based at least in part on one or more vehicle-based criterion being satisfied. In some examples, the one or more vehicle-based criterion may comprise one or more of (i) a vehicle occupancy criterion, (ii) a vehicle location criterion, (iii) a vehicle motion criterion, and (iv) a vehicle status criterion associated with an itinerary for the vehicle.

In some examples, outputting the media presentation comprises: outputting, via the one or more media presentation devices, a first song during a first time interval; outputting, via the one or more media presentation devices, a second song during a second time interval; and outputting, via the one or more media presentation devices, an announcement during a third time interval between the first time interval and the second time interval, wherein the third time interval is based at least in part on user input received via the user interface of the media control device. In some examples, the media presentation causes one or more occupants of the vehicle to perform one or more actions.

In accordance with a second aspect of the disclosure, an apparatus is provided. In one example embodiment of the apparatus, the apparatus includes one or more processors and a memory storing instructions that, when executed by the one or more processors, cause the apparatus to perform any one or more of the methods described herein. A second example apparatus includes means for performing each step of any one of the methods described herein.

In accordance with a third aspect of the disclosure, a system is provided. In one example embodiment of the system, the system includes a user interface and one or more processors in communication with the user interface, wherein the one or more processors are configured to perform any one or more of the methods described herein. In one example embodiment of the system, an example system includes at least one non-transitory computer-readable storage medium having computer program code stored thereon that, in combination with one or more processors, is configured for performing any one of the example methods described herein.

### BRIEF DESCRIPTION OF THE DRAWINGS

FIG. 1 illustrates a system for managing, selecting, and communicating vehicle-based media presentations in accordance with one or more embodiments of the present disclosure.
FIG. 2 illustrates a block diagram of a computing device for managing, selecting, and communicating vehicle-based media presentations in accordance with one or more embodiments of the present disclosure.
FIG. 3 is a dataflow diagram showing example data structures and modules for managing, selecting, and communicating vehicle-based media presentations in accordance with one or more embodiments of the present disclosure.
FIG. 4 is a dataflow diagram showing example data structures and modules for managing, selecting, and communicating vehicle-based media presentations in accordance with one or more embodiments of the present disclosure.
FIG. 5 is an operational example of a user interface that supports managing, selecting, and communicating vehicle-based media presentations in accordance with one or more embodiments of the present disclosure.
FIG. 6 is an operational example of a user interface that supports managing, selecting, and communicating vehicle-based media presentations in accordance with one or more embodiments of the present disclosure.
FIG. 7 is an operational example of a user interface that supports managing, selecting, and communicating vehicle-based media presentations in accordance with one or more embodiments of the present disclosure.
FIG. 8 is an operational example of a user interface that supports managing, selecting, and communicating vehicle-based media presentations in accordance with one or more embodiments of the present disclosure.
FIG. 9 is an operational example of a system architecture that supports managing, selecting, and communicating vehicle-based media presentations in accordance with one or more embodiments of the present disclosure.
FIG. 10 is an operational example of a user interface that supports managing, selecting, and communicating vehicle-based media presentations in accordance with one or more embodiments of the present disclosure.
FIG. 11 is an operational example of a process that supports managing, selecting, and communicating vehicle-based media presentations in accordance with one or more embodiments of the present disclosure.
FIG. 12 is an operational example of a process that supports managing, selecting, and communicating vehicle-based media presentations in accordance with one or more embodiments of the present disclosure.
FIG. 13 illustrates a process for managing, selecting, and communicating vehicle-based media presentations in accordance with one or more embodiments of the present disclosure.

### DETAILED DESCRIPTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not necessarily indicate being based only on or based solely on the referenced element or elements unless so indicated. Like numbers refer to like elements throughout.

### OVERVIEW

Some vehicles may include media devices that enable media playback throughout the vehicle. For example, some passenger aircraft may include a media player that enables flight crew members to start and stop preloaded audio tracks. In some examples, the operation of such systems may involve the use of a flash memory card that includes one or more songs to be played throughout an aircraft. A content curator may create a playlist, and multiple flash memory cards storing the playlist may be produced for multiple aircraft. Maintenance staff members may then be tasked with installing the flash memory cards at each aircraft. In some examples, the installation of the flash memory card may be relatively labor intensive. For example, a maintenance technician may be required to remove one or more panels, install the flash card, test the flash card, and reinstall the one or more panels. Additionally, such installation procedures must be performed at each aircraft of a fleet, which may multiply associated labor and material costs. Moreover, such media systems do not provide flight crew members with the ability to control or customize the audio experience. This limitation may become particularly apparent during boarding procedures, where the repetitive playback of the same songs leads to poor user experience for both passengers and crew members.

In accordance with one or more examples described herein, improved systems and techniques for vehicle-based media presentations are provided. For example, the techniques described herein may enable one or more occupants of a vehicle, such as flight crew members and/or pilots to manage, select, and communicate media presentations via one or more media control devices located in a vehicle. In one embodiment, one or more media control devices may be installed at a vehicle. The one or more media control devices may be in communication with one or more other devices via a wireless communications network, which may enable the one or more media control devices to wirelessly receive media data compiled by a content curator. As described herein, such wireless transmission of media data to the one or more media control devices may conserve workforce resources otherwise associated with the manual installation of flash memory cards in accordance with conventional techniques. Additionally, or alternatively, such systems may include novel user interfaces that provide novel functionalities, such as the ability to personalize and readily modify media presentations by one or more vehicle occupants (e.g., flight crew members, pilots). For example, a media control device may provide multiple media presentation options (e.g., multiple playlists, multiple tracks), which may be viewed and selected by one or more vehicle occupants via one or more user interfaces of the media control device, thereby improving user experience.

Many other technical advantages may be readily apparent to those of ordinary skill in the art. For example, the media control methods and devices described herein may enable users to initiate announcements and select appropriate timing for such announcements, which may be relevant to passenger safety. As one illustrative example, a flight crew member may initiate a safety announcement once the boarding process has been finalized, or in response to the occurrence of an in-flight event, which may cause one or more passengers to perform one or more actions that improve passenger safety. Additionally, or alternatively, the media control systems of the present disclosure may enable flight crew members and pilots to collaborate in the selection of various media presentations, which may result in improved operational efficiency and improved pilot visibility of various boarding procedures.

### DEFINITIONS

In some embodiments, the term "vehicle" refers to a mobile object or machine configured to travel or move from one location to another location. A vehicle may be propelled by one or more propulsions systems, such as one or more engines, one or more motors, and/or the like. In some examples, a vehicle may transport a payload including one or more objects and/or one or more individuals. A vehicle may be equipped with one or more control systems, such as a computing device, which may be configured to control the movement of the vehicle by communicating one or more control signals to one or more propulsion systems of the vehicle and/or one or more systems configured to steer, orient, or otherwise maneuver the vehicle. In some examples, a vehicle and/or a control system of a vehicle may be controlled by or may receive one or more inputs from one or more individuals, such as one or more pilots or drivers. In some other examples, a vehicle may be autonomous or unmanned. As described herein, a vehicle may be an aircraft, a spacecraft, a satellite, an automobile, a maritime vessel, an unmanned cargo vehicle utilized for package delivery, such as within a fulfilment or manufacturing system, and/or the like.

A vehicle may be equipped with one or more systems and/or devices, such as one or more computing devices (e.g., one or more client devices of a server). In some examples, a vehicle may communicate with one or more other vehicles via a wireless network. For example, a computing device of a vehicle may include communication circuitry, which may enable the vehicle to wirelessly communicate with one or more other vehicles and/or one or more other data source systems. In some examples, a vehicle may be a vertical takeoff and landing (VTOL) vehicle and/or an electric VTOL (eVTOL).

In some embodiments, the term "user interface" refers to hardware and/or software that is configured to interface with one or more individuals. For example, a user interface may be a device that receives one or more inputs from a user and/or provides one or more outputs to the user, such as a monitor, a display, a speaker, a microphone, a printer, a keyboard, a mouse, a joystick, and/or the like. In some examples, a user interface may be a software application, such as a graphical user interface that is displayed and/or executed on a computing device. In some examples, a user interface may provide an audio and/or visual representation of information. For example, a user interface of a vehicle, such as a display of a flight management system or any other computing device associated with a vehicle, may provide a representation of media data and/or one or more selectable icons corresponding to media categories and/or media presentations.

In some embodiments, the term "occupant of a vehicle" refers to an individual aboard a vehicle, such as a pilot, a crew member, or a passenger. In some examples, one or more occupants of a vehicle may perform one or more actions to manage media data for the vehicle. For example, a flight attendant (e.g., a crew member) may select, manage, upload, and/or download media data. In some examples, various combinations of vehicle occupants may perform one or more actions to manage media data for the vehicle. For example, a first flight attendant may upload, from a first user device, media data to a media control device of the vehicle. The first flight attendant may then select one or more first media presentations (e.g., songs, playlists) to be presented via one or more media presentation devices of the vehicle. In some examples, a second flight attendant and/or a pilot of the vehicle may select, using a second user device, one or more second media presentations to be presented via one or more media presentation devices. In some examples, the various combinations of vehicle occupants may not select the one or more media presentations via user devices and may instead engage with the media control device directly (e.g., via one or more user interfaces of the media control device) to select the one or more media presentations.

In some embodiments, the term "media control device" refers to a device, such as a computing device, configured to manage, store, communicate, display, receive, output, and/or organize media data. For example, a media control device may be a computing device that is located on a vehicle. The computing device may include one or more processors and/or one or more user interfaces, which may be configured to perform any one or more of the operations described herein. In one example, a user interface of a media control device may be a touchscreen display, which may enable one or more users to view and/or select one or more media presentations (e.g., songs, advertisements, announcements) to be presented by one or more media presentation devices (e.g., headrest multimedia players). In some examples, a media control device may include and/or be controlled via one or more user interfaces (e.g., one or more touchscreen displays located at one or more locations). In some examples, a media control device may be controlled by one or more user devices (e.g., a crew member's tablet, a pilot's tablet, and/or the like). In some examples, a vehicle may include multiple media control devices located throughout the vehicle. In such examples, each media control device may include a respective user interface, which may be utilized to control one or more media presentation devices.

In some examples, media data may be uploaded to one or more media control devices by one or more external computing devices (e.g., one or more ground-based computing devices, one or more user devices, and/or the like). For example, a content curator may utilize a ground-based computing device to generate or otherwise select media data (e.g., playlists), which may then be communicated to the media control device (e.g., via a wireless communications network). In some examples, the ground-based computing device may communicate the media data to one or more user devices (e.g., a tablet of a crew member). In such examples, the user device may then be utilized to upload the media data to a media control device. As described herein, a media control device may include multiple user interfaces located throughout a vehicle. For example, a first user interface (e.g., a first touchscreen display) may be located in a cabin of an aircraft where the first user interface may be interacted with by one or more crew members, such as a flight attendant. A second user interface (e.g., a second touchscreen display) may be located in a cockpit of the aircraft where the second user interface may be interacted with by one or more pilots.

In some examples, a media control device and/or one or more other computing devices may be subcomponents of a system, such as an advanced communication and entertainment system (ACES). An ACES may be an example of a prerecorded announcement and message (PRAM) system. Any of the techniques and/or devices described herein may be implemented as part of an ACES and/or PRAM system. The techniques and/or devices described herein, which may be implemented as or otherwise in accordance with an ACES may enable a personalized boarding experience by enabling flight crew members to play their own choice of content. Additionally, or alternatively, the techniques described herein may enable an airline to make immediate updates to available media data without the intervention of scheduled maintenance (e.g., without a maintenance technician installing an updated or new physical storage medium).

In some embodiments, the term "user device" refers to a device operated by one or more individuals, such as one or more occupants of a vehicle. In some examples, a user device may be configured to receive one or more inputs from one or more users and to communicate one or more outputs to one or more other devices (e.g., to one or more media control devices, to one or more other user devices). In some examples, a user device may be an example of a computing device, such as a smartphone, a wearable device, a tablet, a laptop, a personal computer, an e-book reader, a gaming device, and/or the like. As described herein, a user device may communicate with one or more other devices, such as one or more media control devices. For example, a user device may transmit media data to a media control device, which may enable an individual, such as a crew member of a vehicle to select media data (e.g., one or more playlists) that are loaded onto a media control device.

In some embodiments, the term "media data" refers to digital information or content that may be encoded and/or stored electronically for distribution and/or consumption through various media channels. For example, media data may include any one or more of audio data, video data, image data, text data, and multimedia data. In some examples, media data may be communicated between two or more computing devices. For example, a media control device may transmit media data to one or more media presentation devices. The media data may then be presented by the one or more media presentation devices. As described herein, presenting media data may include playing and/or displaying media data. For example, a media presentation may include playing audio data via one or more speakers and/or displaying video data via one or more display screens. A media presentation may include a multimedia presentation, which may include simultaneous or sequential display and/or presentation of image data and audio data.

Some additional, non-limiting examples of media data described herein include advertisement data (e.g., audio and/or visual ads), announcement data (e.g., audio and/or visual announcements), song data (e.g., the auditory presentation of music and/or the visual display of lyrics), and/or the like. In some examples, media data may include identifying information and/or contextual information, such as text data that identifies or otherwise indicates a name for the data, a type of the data, a size of the data, and/or the like. For example, media data for a specific song may include song data (e.g., audio data) and text data that indicates a name of the song, an artist who released the song, and a duration of the song. Additionally, or alternatively, the media data for the specific song may include image data, such as album art for the song.

In some embodiments, the term "data category" refers to an identifier or classification for data. A data category may indicate or otherwise correspond to a data type. For example, data categories may include any one or more of an audio data category, an image data category, a video data category, a multimedia data category, and a text data category. Additionally, or alternatively, data categories may include any one or more of a song data category, an advertisement data category, and an announcement data category. In some examples, a user interface (e.g., of a media control device) may display one or more indications of one or more data categories. For example, a user interface may display three selectable category icons, each including text that indicates a respective data category.

In some embodiments, the term "selectable icon" refers to a digital representation of a button or a selectable shape, which may be displayed on a user interface. A selectable icon may enable one or more individuals to select one or more options, which may cause one or more actions. For example, a user may press a selectable icon on a touchscreen display or click a selectable icon using a cursor, which may initiate one or more actions, such as one or more media presentations. In some examples, multiple types of selectable icons may be utilized. For example, selectable category icons may be utilized for the selection of various categories of media data. Selectable presentation icons may be utilized for the selection of various media presentations.

As described herein, a user interface (e.g., a user interface of a media control device) may display a plurality of selectable icons. For example, a user interface may display three selectable category icons for selecting or otherwise representing data categories. Such selectable icons may include a first selectable category icon for a song category (e.g., a music category), a second selectable category icon for an advertisement category, and a third selectable category icon for an announcement category. As described herein, a user may select one of the selectable category icons, which may cause one or more selectable presentation icons associated with media data corresponding to a specific category to be displayed. For example, selecting the first selectable category icon for the song category may cause one or more selectable presentation icons to be displayed (e.g., selectable icons representative of specific songs, a list of song selectable icons). Some other examples of selectable icons that may be displayed via a user interface include playlist selection icons, media presentation initiation icons (e.g., play icons), media presentation pause icons, media presentation navigation icons (e.g., rewind icons, fast forward icons), organizational icons (e.g., icons that enable a user to rearrange selectable icons, icons that enable a user to create or organize a playlist, icons that enable a user to add one or more items to a queue), and/or the like.

Although some examples described herein refer to selectable icons, any other type of button or user input element may be utilized to select various options or items displayed on a user interface. For example, a user may select one or more songs displayed on a user interface of a media control device using a keypad, a mouse, a button (e.g., a button on a smartwatch, a button on a cell phone), and/or the like.

In some embodiments, the term "region of a user interface" refers to a section, division, or subdivision of a user interface that may be used to display specific types of information or data. For example, various embodiments of the present disclosure may involve splitting a user interface into two or more regions, which may be utilized to display different types of information. In some examples, two or more display configurations may be utilized to display information via a user interface. For example, a first display configuration may involve utilizing the entirety of the user interface to display information. A second display configuration may be a split screen configuration, where a first half of the user interface is used to display a first type of information and a second half of the user interface is used to display a second type of information (e.g., simultaneously). Accordingly, as described herein, the term "first region of a user interface" may refer to the entirety of the user interface, the term "second region of a user interface" may refer to a first half of the user interface (e.g., a left half of the user interface), and the term "third region of a user interface" may refer to a second half of the user interface (e.g., a right half of the user interface).

As described herein, the user interface may operate in the first display configuration for a first duration and operate in the second display configuration for a second duration. In some examples, a control signal corresponding to a user input may trigger the user interface to switch from the first display configuration to the second display configuration. For example, a user may select a selectable presentation icon representative of a song (e.g., a user may select a song), which may cause the user interface to switch from the first display configuration to the second display configuration. In the first display configuration, the entirety of the user interface (e.g., the first region) may be utilized to display media data category icons (e.g., a music category icon, an advertisement category icon, an announcement category icon) and media icons (e.g., song icons, advertisement icons, announcement icons) for a selected category. For example, if the music category icon is selected, the user interface may display a plurality of song icons representative of individual songs that may be selected by a user. In one illustrative example, when a song is selected, the user interface may switch from the first display configuration to the second display configuration. In the second display configuration, the user interface may be split into two halves (e.g., a left half and a right half, a second region and a third region). The first half of the user interface may display the media data category icons and the media presentation icons (e.g., the same icons displayed in the first display configuration, but resized for the split screen configuration and moved to the left half of the display). The right half of the user interface may display information related to the selected media presentation (e.g., the selected song). For example, the right half of the user interface may display a now playing screen.

Some examples described herein may refer to various portions of a user interface. In such examples, a portion of a user interface or a portion of a region of a user interface may refer to a specific location or area within a region that is used to display information. For example, a portion of a second region of the user interface may be a subsection of the second region (e.g., one or more pixels within the second region, an area within the second region).

In some embodiments, the term "control signal" refers to a signal that causes one or more operations or actions to be performed. A control signal may be communicated by one or more devices and/or one or more elements of a device. For example, a control signal may be generated (e.g., by a user interface, by one or more processors) in response to a user selecting a selectable icon via a user interface. In some examples, a control signal may be communicated to one or more processors of the computing device, which may perform one or more actions in response to receiving the control signal, such as initiating one or more media presentations. In some examples, the control signal may be generated by and/or transmitted by a processor and/or a user interface. As described herein, one or more actions may be performed in response to receiving a control signal. For example, a location of one or more selectable icons may be adjusted based on one or more processors receiving a control signal.

In some embodiments, the term "media presentation" refers to media data being provided or communicated to one or more individuals. For example, a media presentation may include displaying image and/or video data via a user interface, which may be observed or perceived by one or more individuals, such as one or more passengers of a vehicle. Additionally, or alternatively, a media presentation may include playing audio data using one or more speakers. In some examples, a media presentation may include the presentation of audio data, video data, image data, or any combination thereof. As described herein, a media presentation may be provided or otherwise output by one or more media presentation devices.

In some embodiments, the term "media presentation device" refers to a device configured to output one or more media presentations. In some examples, a media presentation device may be an example of a computing device. A media presentation device may include input/output circuitry, such as one or more speakers, one or more microphones, one or more displays, and/or the like. As described herein, a vehicle may include one or more media presentation devices. In some examples, a vehicle may include a plurality of media presentation devices located throughout the vehicle. For example, each seat of a vehicle may include a dedicated (e.g., respective, corresponding) media presentation device so that each passenger may independently view one or more media presentations. In an aerospace context, an aircraft may include a plurality of headrest multimedia players, which may be examples of media presentation devices.

In some examples, a media presentation device may provide one or more media presentations to one or more occupants of a vehicle. In such examples, the one or more occupants may receive the one or more media presentations and perform one or more actions in response to receiving the one or more media presentations. For example, a passenger of a vehicle may hear an audio announcement that is output by a media presentation device. The audio announcement may be an audio recording of a safety presentation, which may include one or more audio descriptions of one or more safety procedures. In such examples, a passenger of a vehicle may hear the audio announcement and perform the one or more safety procedures (e.g., buckling a seatbelt, securing luggage), which may improve passenger safety.

In some embodiments, the term "indication of a media presentation" refers to a representation of a media presentation that has been selected or a media presentation that is currently being output by one or more media presentation devices. For example, an indication of a media presentation may include an image or a visual representation indicating a song, an advertisement, or an announcement that is currently playing.

In some embodiments, the term "secure communication network" refers to an access-controlled communication network. For example, a secure communication network may be a private communication network, which may be utilized if a user enters a specific password and/or specific credentials that grant access to the communication network. In some examples, a secure communication network may be associated with a vehicle. For example, a vehicle may include one or more hardware components, which may enable secure communications between two or more devices (e.g., computing devices) associated with the vehicle.

In some embodiments, the term "vehicle-based criterion" refers to a condition associated with a vehicle. Some examples of vehicle-based criteria may include a vehicle occupancy criterion, a vehicle location criterion, a vehicle motion criterion, a vehicle status criterion, and/or the like. A vehicle occupancy criterion may be satisfied when a vehicle reaches a specific occupancy percentage or when a specific quantity of passengers and/or crew members are onboard a vehicle. A vehicle location criterion may be satisfied when a vehicle is located at a specific location, such as a specific city or a specific airport. Additionally, or alternatively, a vehicle location criterion may be satisfied when a vehicle is in a specific area (e.g., when a vehicle is located at a terminal, when a vehicle is within a specific altitude range, when a vehicle is above or below a specific altitude). A vehicle motion criteria may be satisfied when a vehicle is stopped, when a vehicle is moving, when a vehicle is traveling at specific speed, when a vehicle is traveling with a specific descent rate, when a vehicle is traveling with a specific climb rate, and/or the like. A vehicle status criterion may be satisfied when a vehicle has a specific status, such as when a vehicle is taxiing, when a vehicle is in flight, when a vehicle is grounded, and/or the like. Additionally, or alternatively, a vehicle status criterion may be satisfied when one or more parameters associated with a vehicle reaches a specific value. For example, a vehicle status criterion may be satisfied when a vehicle fuel level value reaches a threshold value.

In some embodiments, the term "user input" refers to information and/or an indication that is provided by a user to a computing device. For example, the selection of a selectable icon by a user may be an example of user input. As described herein, user input may include voice input, text input, touchscreen input, and/or other tactile input (e.g., clicking a button, turning a knob). In some examples, a user may provide user input to a media control device via a user interface. For example, a user may select a selectable icon, which may cause one or more operations to be performed, such as the presentation of media data. In some examples, a user may select one or more icons, which may cause one or more media presentations to be added to a queue (e.g., a current playlist). The user input may include the selection of one or more media presentations to add to a queue and/or one or more locations of the one or more media presentations within the queue.

### EXAMPLE SYSTEMS AND PROCESSES OF THE DISCLOSURE

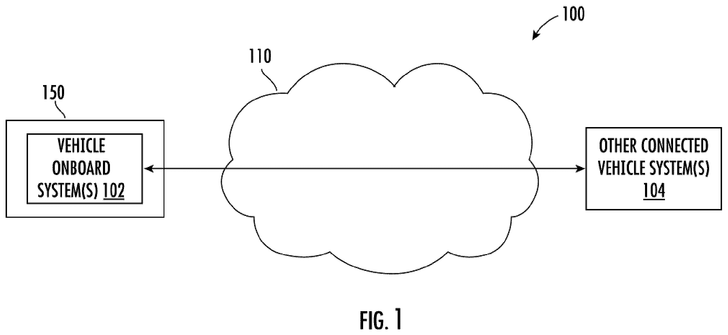

FIG. 1 illustrates a system for managing, selecting, and communicating vehicle-based media presentations in accordance with one or more embodiments of the present disclosure. Specifically, FIG. 1 depicts an example system 100 within which embodiments of the present disclosure may operate to perform the techniques described herein. As depicted, the system 100 includes one or more vehicle onboard systems 102, for example, which embody one or more systems of a vehicle 150. In some embodiments, the one or more vehicle onboard systems 102 are optionally communicable with one or more other computing devices and/or systems, such as one or more other connected vehicle systems 104 (e.g., one or more onboard systems of one or more other vehicles, one or more ground-based systems). In some embodiments, the one or more vehicle onboard systems 102 are communicable with one or more other connected vehicle systems 104 over one or more communication networks, such as the communications network 110.

In some embodiments, the one or more vehicle onboard systems 102 include any number of computing devices, entities, and/or systems embodied in hardware, software, firmware, and/or a combination thereof that control, operate, and/or are onboard a vehicle 150. In some examples, the one or more vehicle onboard systems may include one or more physical components of the vehicle 150, including and without limitation one or more computing devices, one or more displays, one or more flight management systems, one or more engines, one or more wings, one or more props, one or more motors, one or more antennas, one or more landing gear assemblies, and/or the like. In some embodiments, the one or more vehicle onboard systems 102 include one or more sensors (e.g., one or more cameras, one or more sensors of a camera) that gather, collect, and/or otherwise aggregate flight sensor data associated with a vehicle 150 and/or an environment associated therewith. Additionally, or alternatively, in some embodiments, the one or more vehicle onboard systems 102 include one or more computing devices and/or systems embodied in hardware, software, firmware, and/or a combination thereof, that control operation of one or more physical components of the vehicle 150, including and without limitation, one or more displays, one or more flight management systems, one or more engines, one or more wings, one or more props, one or more landing gear assemblies, one or more sensors, and/or the like. Additionally, or alternatively, in some embodiments, the one or more vehicle onboard systems 102 include one or more computing devices and/or systems that generate one or more user interfaces capable of being rendered to one or more displays of the one or more vehicle onboard systems 102. Additionally, or alternatively, in some embodiments, the one or more vehicle onboard systems 102 include one or more computing devices and/or systems that generates and/or maintains data embodying and/or utilized to recreate a virtual environment including virtual aspects corresponding to and/or associated with a real-world environment and/or a virtual vehicle corresponding to the actual vehicle. It will be appreciated that the vehicle 150 may include any number of physical components that enable the vehicle 150 to operate in a particular manner of airborne, space, aquatic, and/or ground-based travel.

In some embodiments, the one or more vehicle onboard systems 102 include one or more personal computers, one or more end-user terminals, one or more monitors, and/or one or more displays. Additionally, or alternatively, in some embodiments, the one or more vehicle onboard systems 102 include one or more data repositories embodied in hardware, software, firmware, and/or any combination thereof to support functionality provided by one or more computing devices of the one or more vehicle onboard systems 102. In some embodiments the one or more vehicle onboard systems 102 include one or more specially configured integrated systems that process data received by and/or controlled by one or more other computing devices and/or systems of the one or more vehicle onboard systems 102.

The one or more other connected vehicle systems 104 may include one or more computing devices, systems, and/or onboard systems of one or more other vehicles in communication with the vehicle 150. It will be appreciated that the one or more other connected vehicle systems 104 in some embodiments include one or more computing devices and/or one or more systems of one or more other vehicles of the same type operating within the same environment as the vehicle 150. For example, in some embodiments some of the other connected vehicle systems 104 include one or more computing devices and/or systems of one or more other vehicles in a fleet of a particular type of vehicle. Additionally, or alternatively, in some embodiments, the one or more other connected vehicle systems 104 include one or more computing devices and/or systems of one or more ground-based vehicles, one or more other types of vehicles, and/or the like.

In some embodiments, the one or more vehicle onboard systems 102 receive data from one or more of the other connected vehicle systems 104 that provides additional context with respect to the environment in which the vehicle 150 is operating. For example, in some embodiments, the one or more vehicle onboard systems 102 communicate with one or more other connected vehicle systems 104 to determine a position of one or more other vehicles, objects, environmental features (e.g., buildings, terrain, and/or the like) within the environment of the vehicle 150. Additionally, or alternatively, in some embodiments, the one or more vehicle onboard systems 102 communicate with one or more of the other connected vehicle systems 104 to receive flight sensor data of a particular data type that is not capturable directly by the one or more vehicle onboard systems 102. For example, in some embodiments, the vehicle 150 does not include a particular sensor for capturing a particular type of data, and instead receives such data of the particular data type from the one or more other connected vehicle systems 104.

In some embodiments, the one or more vehicle onboard systems 102 may include one or more flight management systems, which may themselves include one or more computing devices embodied in hardware, software, firmware, and/or the like that generate, assign, and/or maintain flight plan information and/or other flight detail data for the vehicle 150 and/or one or more other vehicles. For example, in some embodiments, the one or more flight management systems include one or more computing devices and/or systems of an air traffic control (ATC) system and/or other authoritative entity that assigns flight detail data (e.g., one or more particular flight plans and/or information associated therewith, one or more transportation corridors) to one or more vehicles 150. Such information may include, without limitation, flight detail data embodying a visual flight rules (VFR) flight plan, an instrument flight rules (IFR) flight plan, a composite flight plan, and/or the like defining conditions for operating a vehicle 150 within a particular environment.

In some embodiments, the one or more flight management systems include one or more application servers, one or more end user terminals, one or more personal computers, one or more mobile devices, one or more user devices, and/or the like that generate, assign, and/or transmit flight detail data to one or more vehicles 150. Additionally, or alternatively, in some embodiments, the one or more flight management systems may include one or more data repositories embodied in hardware, software, firmware, and/or a combination thereof, that store flight detail data, links between flight detail data and one or more vehicles 150, and/or the like. Additionally, or alternatively, in some embodiments, the one or more flight management systems include one or more computing devices and/or systems that detect and/or monitor operation of one or more vehicles 150 within an environment. For example, in some embodiments, the one or more flight management systems include one or more radar systems that monitor the position of one or more vehicles 150 within a particular portion of an environment.

In some embodiments, the one or more other connected vehicle systems 104 may be examples of systems and/or devices capable of communicating or otherwise sharing data with the one or more vehicle onboard systems 102. The one or more other connected vehicle systems 104 may be ground-based or air-based. In some examples, the one or more other connected vehicle systems 104 may generate data. That is, data may originate from the one or more other connected vehicle systems 104. Additionally, or alternatively, the one or more other connected vehicle systems 104 may receive data that originates from one or more other sources and communicate or otherwise relay the data to one or more devices. The one or more other connected vehicle systems 104 may include one or more data storage systems, such as volatile or non-volatile memory devices. Some illustrative examples of one or more other connected vehicle systems 104 may include other vehicles, weather monitoring systems, ATC systems, and/or the like.

The one or more other connected vehicle systems 104 may include one or more computing devices and/or systems that store and/or generate data. In some examples, the data may represent one or more aspects of a real-world environment, object therein, and/or vehicle 150 therein. In some embodiments, the one or more other connected vehicle systems 104 include one or more data repositories that store data embodying terrain of a particular environment. Additionally, or alternatively, in some embodiments, the one or more other connected vehicle systems 104 include one or more data repositories that store data embodying one or more buildings, one or more objects and/or one or more other features within the environment that one or more vehicles 150 in the environment is to avoid or interact with (e.g., for takeoff and/or landing). In some embodiments, the one or more other connected vehicle systems 104 embody a subsystem of the one or more flight management systems and/or the one or more vehicle onboard systems 102. In some embodiments, the one or more other connected vehicle systems 104 include a cityscape obstacle database, a vertiport database (e.g., including locations, dimensions, and/or other characteristic of one or more landing zones), and/or the like.

In some embodiments, the one or more other connected vehicle systems 104 include one or more application servers, one or more end user terminals, one or more personal computers, one or more mobile devices, one or more user devices, and/or the like. Additionally, or alternatively, in some embodiments, the one or more other connected vehicle systems 104 include one or more database server specially configured to store data pushed from one or more other computing devices and/or systems (e.g., the one or more vehicle onboard systems 102, one or more flight management systems, and/or the like) and/or retrieve data in response to one or more queries from one or more other computing devices and/or systems. In some embodiments, the one or more other connected vehicle systems 104 include one or more remote and/or cloud computing devices accessible to the one or more vehicle onboard systems 102 and/or one or more flight management systems over a communications network, such as the communications network 110.

In some embodiments the communications network 110 enables communication between the various computing devices and/or systems utilizing one or more combinations of wireless and/or wired data transmissions and protocols. In this regard, the communications network 110 may embody any of a myriad of network configurations. In some embodiments, the communications network 110 embodies a public network (e.g., the internet) in whole or in part. In some embodiments, the communications network 110 embodies a private network (e.g., an internal network between particular computing devices) in whole or in part. Additionally, or alternatively, in some embodiments the communications network 110 embodies a direct or private connection facilitated over satellite and/or radio systems that enable long-range communication between the vehicle 150 and corresponding grounded systems. In some other embodiments, the communications network 110 embodies a hybrid network (e.g., a network enabling internal communications between connected computing devices and external communications with other computing devices).

The communications network 110 may include one or more base stations, one or more relays, one or more routers, one or more switches, one or more cell towers, one or more communications cables, one or more satellites, one or more radio antennas, and/or one or more related control systems and/or associated routing stations. In some embodiments, the communications network 110 includes one or more user entity-controlled computing devices and/or other enterprise devices (e.g., an end-user or enterprise router, modem, switch, and/or other network access point) and/or one or more external utility devices (e.g., one or more internet service provider communication towers, one or more cell towers, and/or one or more other devices). In some embodiments, the one or more vehicle onboard systems 102 communicate with the one or more other connected vehicle systems 104 over the communications network 110 to receive and/or transmit encoded image data and/or feedback messages as described herein.

In some examples, the one or more vehicle onboard systems 102 may include any combination of one or more user devices, one or more media control devices, and one or more media presentation devices. As described herein, the one or more media control devices may receive media data from the one or more user devices. In some examples, the one or more user devices may receive the media data from the one or more other connected vehicle systems 104. For example, a ground-based computing device, such as a computing device operated by a content curator, may transmit the media data to the one or more user devices. The one or more user devices may then transmit the media data to the one or more media control devices. The one or more media control devices may then display various types of icons representative of various media data objects (e.g., songs, advertisements, announcements) of the media data. One or more occupants of the vehicle 150 may then select one or more media data objects to be presented on one or more media presentation devices of the vehicle 150.

In accordance with one or more examples described herein, an advanced communication and entertainment system (ACES) may be provided. An ACES may be an example of a vehicle onboard system 102. An ACES may be an example of a prerecorded announcement and message (PRAM) solution that enables a personalized boarding experience by playing content that is personalized by one or more individuals, such as one or more flight crew members, one or more ground-crew members, and/or the like. ACES may allow an airline to make immediate system updates without performing resource intensive maintenance operations (e.g., without a maintenance technician installing an updated flash card at a vehicle). As described herein, ACES enables content to be organized into three different categories of tracks (e.g., media presentations), including music tracks, advertisement tracks, and announcement tracks. The flight crew may then choose to play any one or more music tracks and add advertisements and/or announcements to a queue (e.g., between, before, or after music tracks) as needed. In order for a flight crew member to have control, media controls and content may be displayed via a user interface.

On board an aircraft, the flight crew may add content, view currently playing tracks, and view tracks that are next in a queue using the divided display (e.g., the split screen configuration) that shows both media content (filtered by three categories) and the media player (e.g., showing a currently playing track). The user interface divided layout offers users the ability to choose one or more specific tracks and play them in either consecutive or randomized order. Additionally, it allows users to browse through and add advertisements or announcements in between tracks. Such systems and techniques provide significant improvements when compared to conventional systems and techniques, which lack displays and only allows for the saving and playing of a single media file, with no option for randomizing or selecting specific tracks. Such systems present challenges for crew members, such as having to repeatedly listen to the same songs in the same order.

In accordance with one or more examples described herein, a user interface may be provided. The user interface may display a home screen that shows all playlists available. After selecting a card (e.g., a playlist card icon), the playlist details will appear, showing a segmented control for the three different categories of tracks. User may select any music track to start a playlist. After the selection, an animation (e.g., a transition animation) may divide the screen to show the track categories along with all the content in them. For example, the media player (e.g., now playing screen) may be introduced by sliding into view from the right side of the screen.

A user may toggle between the three different categories and view the content within each category. A user may click on an "add to queue" or "play now" selectable icon depending on the situation. Queue lists may be accessed by clicking on the queue icon. Tracks in the queue can be rearranged or removed. Adding to the queue may allow for the current track to play until finished and may play the added track sequentially. If "play now" is selected, the current track may be interrupted and resumed after the added track is played.

Airlines desire passenger experience innovations to drive brand loyalty and improve turn-times. Boarding music may boost passengers' moods, making the boarding experience less stressful and faster. The ACES is a PRAM solution that enables a personalized boarding experience by playing personalized choices of music, advertisements and/or announcements. ACES allows airlines to make immediate updates, without the intervention of scheduled maintenance. Using ACES, airlines may improve passenger satisfaction, explore new marketing opportunities, and increase efficiency by minimizing the need for maintenance.

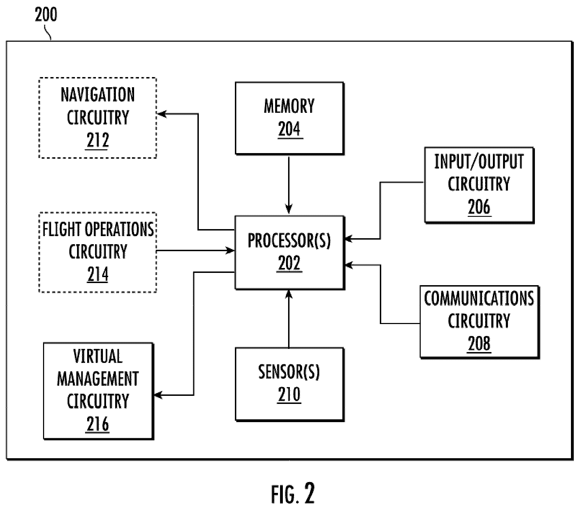

FIG. 2 illustrates a block diagram of a computing device for managing, selecting, and communicating vehicle-based media presentations in accordance with one or more embodiments of the present disclosure. Specifically, FIG. 2 depicts a computing device 200. In some embodiments, the one or more vehicle onboard systems 102 and/or the one or more other connected vehicle systems 104 described with reference to FIG. 1 may include one or more computing devices 200. As depicted, the computing device 200 includes one or more processors 202, one or more memories 204, input/output circuitry 206, communications circuitry 208, one or more sensors 210, navigation circuitry 212, flight operations circuitry 214, and/or virtual management circuitry 216. In some such embodiments, the navigation circuitry 212 and/or the flight operations circuitry 214 is/are optional.

In some embodiments, the computing device 200 is configured, using one or more of the sets of circuitry embodying the processor 202, the memory 204, the input/output circuitry 206, the communications circuitry 208, the one or more sensors 210, the navigation circuitry 212, the flight operations circuitry 214, and/or the virtual management circuitry 216, to execute any one or more of the operations described herein. Although components are described with respect to functional limitations, the particular implementations may include the user of the particular computing hardware, who may provide inputs to and/or receive outputs from the computing device 200 via the input/output circuitry 206. It should also be understood that in some embodiments certain components described herein include similar or common hardware. For example, two sets of circuitry may both leverage use of the same processor 202, network interface, storage medium, and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the computing device 200 provide or supplement the functionality of another particular set of circuitry. For example, the processor 202 in some embodiments provides processing functionality to any of the other sets of circuitry, the memory 204 provides storage functionality to any of other the sets of circuitry, the communications circuitry 208 provides network interface functionality to any of the other sets of circuitry, and/or the like.

In some embodiments, the processor 202 (and/or co-processor or any other processing circuitry assisting or otherwise associated with the processor) is/are in communication with the memory 204 via a bus for passing information among components of the computing device 200. In some embodiments, for example, the memory 204 is non-transitory and includes, for example, one or more volatile and/or non-volatile memories. In other words, for example, the memory 204 may include or embody an electronic storage device (e.g., a computer readable storage medium). In some embodiments, the memory 204 is configured to store information, data, content, applications, instructions, or the like, for enabling the computing device 200 to carry out various functions in accordance with example embodiments of the present disclosure.

In various embodiments, the processor 202 is embodied in a number of different ways. For example, in some example embodiments, the processor 202 includes one or more processing devices configured to operate independently. Additionally, or alternatively, in some embodiments, the processor 202 includes a processor configured in tandem via a bus to enable independent execution of instructions, pipelining, and/or multithreading. The use of the terms "processor" and "processing circuitry" should be understood to include a single core processor, a multi-core processor, multiple processors internal to the computing device 200, and/or one or more remote or cloud-based processors external to the computing device 200.

In an example embodiment, the processor 202 is configured to execute instructions stored in the memory 204 or otherwise accessible to the processor 202. Additionally, or alternatively, the processor 202 may be configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Additionally, or alternatively, as another example, when the processor 202 is embodied as an executor of software instructions, the instructions specifically configure the processor 202 to perform the algorithms embodied in the specific operations described herein when such instructions are executed.

In some embodiments, computing device 200 includes input/output circuitry 206 and/or communications circuitry 208 that provides output to a user and, in some embodiments, transmits encoded image data to one or more other devices. In some embodiments, the input/output circuitry 206 and/or the communications circuitry 208 is/are in communication with the processor 202 to provide such functionality. The input/output circuitry 206 may comprise one or more user interfaces and in some embodiments includes one or more displays that comprise the one or more interfaces rendered as a web user interface, an application user interface, a user device, a backend system, or the like. In some embodiments, the input/output circuitry 206 also includes a keyboard, a mouse, a joystick, a touch screen, touch areas, soft keys, a microphone, a speaker, or other input/output mechanisms. The processor 202, and/or input/output circuitry 206 comprising a processor, in some embodiments is configured to control one or more functions of one or more user interface elements through computer program instructions (e.g., software and/or firmware) stored on a memory accessible to the processor 202 (e.g., memory 204, and/or the like). In some embodiments, the input/output circuitry 206 includes or utilizes a user-facing application to provide input/output functionality to a service maintainer device and/or other display associated with a user.

The communications circuitry 208 includes any means such as a device or circuitry embodied in either hardware or a combination of hardware and software that is configured to receive and/or transmit data from/to a communications network and/or any other computing device, circuitry, or module in communication with the computing device 200. In this regard, the communications circuitry 208 includes, for example in some embodiments, a network interface for enabling communications with a wired or wireless communications network. Additionally, or alternatively in some embodiments, the communications circuitry 208 includes one or more network interface cards, one or more antennas, one or more busses, one or more switches, one or more routers, one or more modems, and supporting hardware, firmware, and/or software, or any other device suitable for enabling communications via one or more communication networks. Additionally, or alternatively, the communications circuitry 208 includes circuitry for interacting with the one or more antennas and/or other hardware or software to cause transmission of signals via the one or more antennas or to handle receipt of signals received via the one or more antennas. In some embodiments, the communications circuitry 208 enables transmission to and/or receipt of data from one or more computing devices and/or systems of one or more other connected vehicle systems 104 and/or one or more flight management systems in communication with the computing device 200.

The one or more sensors 210 include hardware, software, firmware, and/or a combination thereof, that supports generation, capturing, aggregating, retrieval, and/or receiving of one or more portions of data, such as flight sensor data and/or image data. In some embodiments, the one or more sensors 210 include one or more components of a vehicle. The one or more sensors 210 in some embodiments are affixed to, within, and/or otherwise a part of a vehicle including or otherwise associated with the computing device 200. For example, in some embodiments, one or more of the sensors 210 are mounted to the vehicle. Non-limiting examples of sensors 210 include altimeters (e.g., radio and/or barometric), pressure sensors, pitot tubes, anemometers, image cameras, video cameras, infrared sensors, and/or the like. Additionally, or alternatively, in some embodiments, the one or more sensors 210 include one or more communication systems that enable aggregation of one or more portions of flight sensor data from one or more external computing devices and/or systems communicable with the computing device 200, for example one or more other connected vehicle systems 104 and/or one or more flight management systems. In some embodiments, the one or more sensors 210 include any of a myriad of sensors conventionally associated with drones, helicopters, and/or other urban air mobility vehicles. Additionally, or alternatively, in some embodiments, the one or more sensors 210 include one or more high-sensitivity sensors to facilitate and/or enable high accuracy capturing of data in certain circumstances. For example, in some embodiments, the one or more sensors 210 include one or more high-sensitivity altimeters that capture detailed altitude information within a few feet (e.g., within tens of feet) from a landing zone. In this regard, such high-sensitivity sensors in some embodiments provide higher-accuracy data when a vehicle is close to a landing zone, where such higher-accuracy data is utilized in depicting accurate positioning of a virtual vehicle corresponding to the vehicle within a virtual environment with respect to a virtual representation of the landing zone and/or a virtual corridor.

In some embodiments, the one or more sensors 210 include hardware, software, firmware, and/or a combination thereof, embodying one or more navigation sensors. In some embodiments, the one or more navigation sensors include a global positioning satellite (GPS) tracking chip and/or the like enabling location services to be requested and/or determined for a particular vehicle. Additionally, or alternatively, in some embodiments, the one or more sensors 210 include hardware, software, firmware, and/or any combination thereof, embodying one or more inertial navigation sensors that measure speed, acceleration, orientation, and/or position-related data in a 3D environment. Additionally, or alternatively, in some embodiments, the one or more sensors 210 include one or more cameras associated with a synthetic vision system (SVS). In some such embodiments, such an SVS camera captures image data representations of the real-world environment around a vehicle for use in generating one or more corresponding user interface depicting the captured image data, augmenting such image data, and/or otherwise providing data to enable an operator to acquire situational awareness based at least in part on the captured image data. It will be appreciated that, in some embodiments, the one or more sensors 210 include a separate processor, specially configured field programmable gate array (FPGA), or a specially programmed application specific integrated circuit (ASIC).

The navigation circuitry 212, which may optionally be included, includes hardware, software, firmware, and/or a combination thereof, that supports various functionality associated with navigating a vehicle. In some embodiments, navigation circuitry 212 includes hardware, software, firmware, and/or a combination thereof, that receives flight plan data, location service data representing a location of the vehicle, and/or the like. Additionally, or alternatively, in some embodiments, the navigation circuitry 212 includes hardware, software, firmware, and/or a combination thereof, that determines a location of a landing zone from which a vehicle is taking off and/or where a vehicle is landing. Additionally, or alternatively, in some embodiments, the navigation circuitry 212 includes hardware, software, firmware, and/or a combination thereof, that determines a location along a flight path at which a vehicle is to switch operational mode (e.g., to initiate change to and/or from a vertical landing mode and/or vertical takeoff mode). It will be appreciated that, in some embodiments, navigation circuitry 212 includes a separate processor, specially configured FPGA, or a specially programmed ASIC.

The flight operations circuitry 214, which may optionally be included, includes hardware, software, firmware, and/or a combination thereof, that supports various functionality associated with controlling a vehicle. In some embodiments, the flight operations circuitry 214 includes hardware, software, firmware, and/or a combination thereof, that autonomously control one or more components of a vehicle to facilitate movement of the vehicle along a particular flight path. Additionally, or alternatively, in some embodiments, the flight operations circuitry 214 includes hardware, software, firmware, and/or a combination thereof, that semi-autonomously control one or more components of a vehicle, for example where certain aspects of the operation of the vehicle are autonomously performed and others (e.g., directional control) is/are controlled by a user (e.g., a pilot). Additionally, or alternatively, in some embodiments, the flight operations circuitry 214 includes hardware, software, firmware, and/or a combination thereof, that receives pilot input for controlling one or more components of a vehicle, for example via vehicle flight controls to alter speed and/or direction of the vehicle. Additionally, or alternatively, in some embodiments, the flight operations circuitry 214 includes hardware, software, firmware, and/or a combination thereof, that causes changes to an operational mode of a vehicle, for example autonomously based at least in part on one or more datadriven events and/or triggers, or in response to user input initiating the change in operational mode. It will be appreciated that, in some embodiments, the flight operations circuitry 214 includes a separate processor, specially configured FPGA, or a specially programmed ASIC.

The virtual management circuitry 216 includes hardware, software, firmware, and/or a combination thereof, that supports various functionality associated with generating and/or maintaining one or more virtual elements and/or outputting one or more urban air mobility (UAM) visualization interfaces embodying one or more views of one or more virtual elements. In some embodiments, the virtual management circuitry 216 includes hardware, software, firmware, and/or a combination thereof, that generates a virtual environment based at least in part on flight sensor data. Additionally, or alternatively, in some embodiments, the virtual management circuitry 216 includes hardware, software, firmware, and/or a combination thereof, that generates a virtual vehicle based at least in part on flight sensor data, the virtual vehicle corresponding to a vehicle in a real-world environment. Additionally, or alternatively, in some embodiments, the virtual management circuitry 216 includes hardware, software, firmware, and/or a combination thereof, that generates a virtual corridor based at least in part on flight sensor data. Additionally, or alternatively, in some embodiments, the virtual management circuitry 216 includes hardware, software, firmware, and/or a combination thereof, that maintains one or more virtual elements (e.g., a virtual environment, virtual vehicle, virtual corridor, and/or the like) as new data is received. For example, in some embodiments, the virtual management circuitry 216 updates a speed, direction, velocity, altitude, and/or other data value associated with a virtual vehicle in a virtual environment as updated flight sensor data associated with a corresponding vehicle is received. Additionally, or alternatively, in some embodiments, the virtual management circuitry 216 includes hardware, software, firmware, and/or a combination thereof, that outputs data embodying a UAM visualization interface from a particular view with respect to the virtual vehicle, for example a profile view, an exocentric view, and/or an egocentric view.

In some embodiments, the virtual management circuitry 216 includes hardware, software, firmware, and/or any combination thereof, that generates one or more user interface elements and/or otherwise causes rendering of one or more user interfaces including one or more specially configured user interface elements. For example, in some embodiments, the virtual management circuitry 216 includes hardware, software, firmware, and/or a combination thereof that generates one or more virtual elements to be depicted via a UAM visualization interface. For example, in some embodiments, the virtual management circuitry 216 generates a UAM visualization interface depicting a virtual corridor, with or without reliance on maintaining a virtual environment. In some embodiments, the virtual management circuitry 216 includes a graphics processor that generates one or more specially configured virtual user interface elements (e.g., a representation of a virtual corridor) based at least in part on flight sensor data, and/or generating sub-interfaces including some or all of such virtual user interface elements and/or other interface elements. Additionally, or alternatively, in some embodiments, the virtual management circuitry 216 includes one or more displays embodied in hardware, software, firmware, and/or a combination thereof, that render one or more user interfaces and/or elements thereof. It will be appreciated that, in some embodiments, virtual management circuitry 216 includes a separate processor, specially configured FPGA, or a specially programmed ASIC.

It will be appreciated that, in some embodiments, two or more of the sets of circuitries 202-216 are combinable. Additionally, or alternatively, in some embodiments, one or more of the sets of circuitry 202-216 perform some or all of the functionality described associated with another component. For example, in some embodiments, one or more of the sets of circuitry 202-216 are combined into a single component embodied in hardware, software, firmware, and/or a combination thereof. For example, in some embodiments, two or more of the navigation circuitry 212, flight operations circuitry 214, and/or virtual management circuitry 216 are embodied by a single set of circuitry that performs the combined operations of the individual sets of circuitry. Similarly, in some embodiments, one or more of the sets of circuitry, for example navigation circuitry 212, flight operations circuitry 214, and/or virtual management circuitry 216, is/are combined with the processor 202, such that the processor 202 performs one or more of the operations described above with respect to each of these other sets of circuitry.

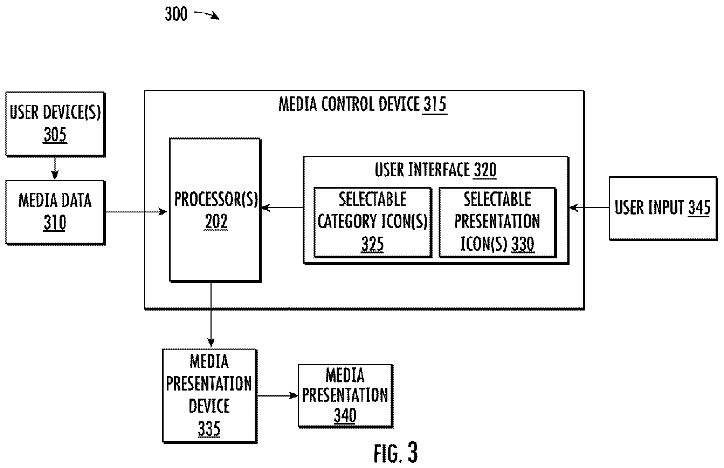

FIG. 3 is a dataflow diagram 300 showing example data structures and modules for managing, selecting, and communicating vehicle-based media presentations in accordance with one or more embodiments of the present disclosure. In some examples, one or more processors 202 may receive, from a user device 305 and by one or more processors 202 of a media control device 315 of a vehicle, media data 310 comprising one or more of one or more songs, one or more advertisements, and one or more announcements. In some embodiments, a vehicle may be a mobile object or machine configured to travel or move from one location to another location. A vehicle may be propelled by one or more propulsions systems, such as one or more engines, one or more motors, and/or the like. In some examples, a vehicle may transport a payload including one or more objects and/or one or more individuals. A vehicle may be equipped with one or more control systems, such as a computing device, which may be configured to control the movement of the vehicle by communicating one or more control signals to one or more propulsion systems of the vehicle and/or one or more systems configured to steer, orient, or otherwise maneuver the vehicle. In some examples, a vehicle and/or a control system of a vehicle may be controlled by or may receive one or more inputs from one or more individuals, such as one or more pilots or drivers. In some other examples, a vehicle may be autonomous or unmanned. As described herein, a vehicle may be an aircraft, a spacecraft, a satellite, an automobile, a maritime vessel, an unmanned cargo vehicle utilized for package delivery, such as within a fulfilment or manufacturing system, and/or the like.

A vehicle may be equipped with one or more systems and/or devices, such as one or more computing devices (e.g., one or more client devices of a server). In some examples, a vehicle may communicate with one or more other vehicles via a wireless network. For example, a computing device of a vehicle may include communication circuitry, which may enable the vehicle to wirelessly communicate with one or more other vehicles and/or one or more other data source systems. In some examples, a vehicle may be a vertical takeoff and landing (VTOL) vehicle and/or an electric VTOL (eVTOL).

In some embodiments, a media control device 315 may be a device, such as a computing device, configured to manage, store, communicate, display, receive, output, and/or organize media data. For example, a media control device 315 may be a computing device that is located on a vehicle. The computing device may include one or more processors 202 and/or one or more user interfaces 320, which may be configured to perform any one or more of the operations described herein. In one example, a user interface 320 of a media control device 315 may be a touchscreen display, which may enable one or more users to view and/or select one or more media presentations (e.g., songs, advertisements, announcements) to be presented by one or more media presentation devices 335 (e.g., headrest multimedia players). In some examples, a media control device 315 may include and/or be controlled via one or more user interfaces 320 (e.g., one or more touchscreen displays located at one or more locations). In some examples, a media control device 315 may be controlled by one or more user devices 305 (e.g., a crew member's tablet, a pilot's tablet, and/or the like). In some examples, a vehicle may include multiple media control devices 315 located throughout the vehicle. In such examples, each media control device 315 may include a respective user interface 320, which may be utilized to control one or more media presentation devices 335.

In some examples, media data may be uploaded to one or more media control devices 315 by one or more external computing devices (e.g., one or more ground-based computing devices, one or more user devices 305, and/or the like). For example, a content curator may utilize a ground-based computing device to generate or otherwise select media data (e.g., playlists), which may then be communicated to the media control device 315 (e.g., via a wireless communications network). In some examples, the ground-based computing device may communicate the media data to one or more user devices 305 (e.g., a tablet of a crew member). In such examples, the user device 305 may then be utilized to upload the media data to a media control device 315. As described herein, a media control device 315 may include multiple user interfaces 320 located throughout a vehicle. For example, a first user interface 320 (e.g., a first touchscreen display) may be located in a cabin of an aircraft where the first user interface 320 may be interacted with by one or more crew members, such as a flight attendant. A second user interface 320 (e.g., a second touchscreen display) may be located in a cockpit of the aircraft where the second user interface 320 may be interacted with by one or more pilots.

In some embodiments, media data may be digital information or content that may be encoded and/or stored electronically for distribution and/or consumption through various media channels. For example, media data may include any one or more of audio data, video data, image data, text data, and multimedia data. In some examples, media data may be communicated between two or more computing devices. For example, a media control device 315 may transmit media data to one or more media presentation devices 335. The media data may then be presented by the one or more media presentation devices 335. As described herein, presenting media data may include playing and/or displaying media data. For example, a media presentation 340 may include playing audio data via one or more speakers and/or displaying video data via one or more display screens. A media presentation 340 may include a multimedia presentation, which may include simultaneous or sequential display and/or presentation of image data and audio data.

Some additional, non-limiting examples of media data described herein include advertisement data (e.g., audio and/or visual ads), announcement data (e.g., audio and/or visual announcements), song data (e.g., the auditory presentation of music and/or the visual display of lyrics), and/or the like. In some examples, media data may include identifying information and/or contextual information, such as text data that identifies or otherwise indicates a name for the data, a type of the data, a size of the data, and/or the like. For example, media data for a specific song may include song data (e.g., audio data) and text data that indicates a name of the song, an artist who released the song, and a duration of the song. Additionally, or alternatively, the media data for the specific song may include image data, such as album art for the song.

In some embodiments, a user device 305 may be a device operated by one or more individuals, such as one or more occupants of a vehicle. In some examples, a user device 305 may be configured to receive one or more inputs from one or more users and to communicate one or more outputs to one or more other devices (e.g., to one or more media control devices 315, to one or more other user devices 305). In some examples, a user device 305 may be an example of a computing device, such as a smartphone, a wearable device, a tablet, a laptop, a personal computer, an e-book reader, a gaming device, and/or the like. As described herein, a user device 305 may communicate with one or more other devices, such as one or more media control devices 315. For example, a user device 305 may transmit media data 310 to a media control device 315, which may enable an individual, such as a crew member of a vehicle to select media data 310 (e.g., one or more playlists) that are loaded onto a media control device 315.

In some examples, a user interface 320 of a media control device 315 may display (e.g., one or more processors 202 may cause the user interface 320 to display), via a portion of a first region of the user interface 320, a plurality of selectable category icons 325 representative of a plurality of data categories for the media data 310, the plurality of data categories comprising a song category, an advertisement category, and an announcement category.

In some embodiments, a user interface 320 may include hardware and/or software that is configured to interface with one or more individuals. For example, a user interface 320 may be a device that receives one or more inputs from a user and/or provides one or more outputs to the user, such as a monitor, a display, a speaker, a microphone, a printer, a keyboard, a mouse, a joystick, and/or the like. In some examples, a user interface 320 may be a software application, such as a graphical user interface that is displayed and/or executed on a computing device. In some examples, a user interface 320 may provide an audio and/or visual representation of information. For example, a user interface 320 of a vehicle, such as a display of a flight management system or any other computing device associated with a vehicle, may provide a representation of media data 310 and/or one or more selectable icons corresponding to media categories and/or media presentations 340.

In some embodiments, a data category may be an identifier or classification for data. A data category may indicate or otherwise correspond to a data type. For example, data categories may include any one or more of an audio data category, an image data category, a video data category, a multimedia data category, and a text data category. Additionally, or alternatively, data categories may include any one or more of a song data category, an advertisement data category, and an announcement data category. In some examples, a user interface 320 (e.g., of a media control device 315) may display one or more indications of one or more data categories. For example, a user interface 320 may display three selectable category icons 325, each including text that indicates a respective data category.

In some embodiments, a selectable icon may be a digital representation of a button or a selectable shape, which may be displayed on a user interface 320. A selectable icon may enable one or more individuals to select one or more options, which may cause one or more actions. For example, a user may press a selectable icon on a touchscreen display or click a selectable icon using a cursor, which may initiate one or more actions, such as one or more media presentations 340. In some examples, multiple types of selectable icons may be utilized. For example, selectable category icons 325 may be utilized for the selection of various categories of media data 310. Selectable presentation icons 330 may be utilized for the selection of various media presentations 340.

As described herein, a user interface 320 (e.g., a user interface 320 of a media control device 315) may display a plurality of selectable icons. For example, a user interface 320 may display three selectable category icons 325 for selecting or otherwise representing data categories. Such selectable icons may include a first selectable category icon for a song category (e.g., a music category), a second selectable category icon for an advertisement category, and a third selectable category icon for an announcement category. As described herein, a user may select one of the selectable category icons 325, which may cause one or more selectable presentation icons 330 associated with media data 310 corresponding to a specific category to be displayed. For example, selecting the first selectable category icon for the song category may cause one or more selectable presentation icons 330 to be displayed (e.g., selectable icons representative of specific songs, a list of song selectable icons). Some other examples of selectable icons that may be displayed via a user interface 320 include playlist selection icons, media presentation initiation icons (e.g., play icons), media presentation pause icons, media presentation navigation icons (e.g., rewind icons, fast forward icons), organizational icons (e.g., icons that enable a user to rearrange selectable icons, icons that enable a user to create or organize a playlist, icons that enable a user to add one or more items to a queue), and/or the like.

Although some examples described herein refer to selectable icons, any other type of button or user input 345 element may be utilized to select various options or items displayed on a user interface 320. For example, a user may select one or more songs displayed on a user interface 320 of a media control device 315 using a keypad, a mouse, a button (e.g., a button on a smartwatch, a button on a cell phone), and/or the like.

In some embodiments, a region of a user interface 320 may be a section, division, or subdivision of a user interface 320 that may be used to display specific types of information or data. For example, various embodiments of the present disclosure may involve splitting a user interface 320 into two or more regions, which may be utilized to display different types of information. In some examples, two or more display configurations may be utilized to display information via a user interface 320. For example, a first display configuration may involve utilizing the entirety of the user interface 320 to display information. A second display configuration may be a split screen configuration, where a first half of the user interface 320 is used to display a first type of information and a second half of the user interface 320 is used to display a second type of information (e.g., simultaneously). Accordingly, as described herein, the term "first region of a user interface" may refer to the entirety of the user interface 320, the term "second region of a user interface" may refer to a first half of the user interface 320 (e.g., a left half of the user interface 320), and the term "third region of a user interface" may refer to a second half of the user interface 320 (e.g., a right half of the user interface 320).

As described herein, the user interface 320 may operate in the first display configuration for a first duration and operate in the second display configuration for a second duration. In some examples, a control signal corresponding to a user input 345 may trigger the user interface 320 to switch from the first display configuration to the second display configuration. For example, a user may select a selectable presentation icon 330 representative of a song (e.g., a user may select a song), which may cause the user interface 320 to switch from the first display configuration to the second display configuration. In the first display configuration, the entirety of the user interface 320 (e.g., the first region) may be utilized to display media data category icons (e.g., a music category icon, an advertisement category icon, an announcement category icon) and media icons (e.g., song icons, advertisement icons, announcement icons) for a selected category. For example, if the music category icon is selected, the user interface 320 may display a plurality of song icons representative of individual songs that may be selected by a user. In one illustrative example, when a song is selected, the user interface 320 may switch from the first display configuration to the second display configuration. In the second display configuration, the user interface 320 may be split into two halves (e.g., a left half and a right half, a second region and a third region). The first half of the user interface 320 may display the media data category icons and the media presentation icons (e.g., the same icons displayed in the first display configuration, but resized for the split screen configuration and moved to the left half of the display). The right half of the user interface 320 may display information related to the selected media presentation 340 (e.g., the selected song). For example, the right half of the user interface 320 may display a now playing screen.

Some examples described herein may refer to various portions of a user interface 320. In such examples, a portion of a user interface 320 or a portion of a region of a user interface 320 may refer to a specific location or area within a region that is used to display information. For example, a portion of a second region of the user interface 320 may be a subsection of the second region (e.g., one or more pixels within the second region, an area within the second region). In some examples, the one or more processors 202 may receive a control signal that initiates a media presentation 340, the media presentation 340 based on the media data 310. In some embodiments, a control signal may be a signal that causes one or more operations or actions to be performed. A control signal may be communicated by one or more devices and/or one or more elements of a device. For example, a control signal may be generated (e.g., by a user interface 320, by one or more processors 202) in response to a user selecting a selectable icon via a user interface 320. In some examples, a control signal may be communicated to one or more processors 202 of the computing device, which may perform one or more actions in response to receiving the control signal, such as initiating one or more media presentations 340. In some examples, the control signal may be generated by and/or transmitted by a processor 202 and/or a user interface 320. As described herein, one or more actions may be performed in response to receiving a control signal. For example, a location of one or more selectable icons may be adjusted based on one or more processors 202 receiving a control signal.

In some embodiments, a media presentation 340 may include media data 310 being provided or communicated to one or more individuals. For example, a media presentation 340 may include displaying image and/or video data via a user interface 320, which may be observed or perceived by one or more individuals, such as one or more passengers of a vehicle. Additionally, or alternatively, a media presentation 340 may include playing audio data using one or more speakers. In some examples, a media presentation 340 may include the presentation of audio data, video data, image data, or any combination thereof. As described herein, a media presentation 340 may be provided or otherwise output by one or more media presentation devices 335.

In some examples, the one or more processors 202 may adjust and/or cause the user interface 320 to adjust a location of the plurality of selectable category icons 325 on the user interface 320 from the portion of the first region of the user interface 320 to a portion of a second region of the user interface 320 based on receiving the control signal that initiates the media presentation 340. In some examples, the one or more processors 202 may output, to one or more media presentation devices 335, the media presentation 340 based on receiving the control signal that initiates the media presentation 340.

In some embodiments, a media presentation device 335 may be a device configured to output one or more media presentations 340. In some examples, a media presentation device 335 may be an example of a computing device. A media presentation device 335 may include input/output circuitry, such as one or more speakers, one or more microphones, one or more displays, and/or the like. As described herein, a vehicle may include one or more media presentation devices 335. In some examples, a vehicle may include a plurality of media presentation devices 335 located throughout the vehicle. For example, each seat of a vehicle may include a dedicated (e.g., respective, corresponding) media presentation device 335 so that each passenger may independently view one or more media presentations 340. In an aerospace context, an aircraft may include a plurality of headrest multimedia players, which may be examples of media presentation devices 335.

In some examples, a media presentation device 335 may provide one or more media presentations 340 to one or more occupants of a vehicle. In such examples, the one or more occupants may receive the one or more media presentations 340 and perform one or more actions in response to receiving the one or more media presentations 340. For example, a passenger of a vehicle may hear an audio announcement that is output by a media presentation device 335. The audio announcement may be an audio recording of a safety presentation, which may include one or more audio descriptions of one or more safety procedures. In such examples, a passenger of a vehicle may hear the audio announcement and perform the one or more safety procedures (e.g., buckling a seatbelt, securing luggage), which may improve passenger safety.

In some examples, the one or more processors 202 may cause the user interface 320 to display the plurality of selectable category icons 325 via the portion of the second region based on receiving the control signal. Additionally, or alternatively, the one or more processors 202 may cause the user interface 320 to display an indication of the media presentation via a portion of a third region of the user interface 320 based on receiving the control signal, where the second region of the user interface 320 includes a first half of the user interface 320 and the third region of the user interface 320 includes a second half of the user interface 320.

In some embodiments, an indication of a media presentation may be a representation of a media presentation 340 that has been selected or a media presentation 340 that is currently being output by one or more media presentation devices 335. For example, an indication of a media presentation may include an image or a visual representation indicating a song, an advertisement, or an announcement that is currently playing.

In some examples, the one or more processors 202 may cause the user interface 320 to display, via a second portion of the second region, a plurality of selectable presentation icons 330 corresponding to a selected icon of the plurality of selectable category icons 325. In some examples, receiving the media data 310 from the user device 305 includes receiving the media data 310 via a secure communication network associated with the vehicle. In some embodiments, a secure communications network may be an access-controlled communication network. For example, a secure communication network may be a private communication network, which may be utilized if a user enters a specific password and/or specific credentials that grant access to the communication network. In some examples, a secure communication network may be associated with a vehicle. For example, a vehicle may include one or more hardware components, which may enable secure communications between two or more devices (e.g., computing devices) associated with the vehicle.

In some examples, the user device 305 may include a wearable device, a tablet, or a cell phone. In some examples, the control signal may be received from the user device 305 operated by a first occupant of the vehicle. In some embodiments, an occupant of a vehicle may be an individual aboard a vehicle, such as a pilot, a crew member, or a passenger. In some examples, one or more occupants of a vehicle may perform one or more actions to manage media data 310 for the vehicle. For example, a flight attendant (e.g., a crew member) may select, manage, upload, and/or download media data 310. In some examples, various combinations of vehicle occupants may perform one or more actions to manage media data 310 for the vehicle. For example, a first flight attendant may upload, from a first user device 305, media data 310 to a media control device 315 of the vehicle. The first flight attendant may then select one or more first media presentations 340 (e.g., songs, playlists) to be presented via one or more media presentation devices 335 of the vehicle. In some examples, a second flight attendant and/or a pilot of the vehicle may select, using a second user device 305, one or more second media presentations 340 to be presented via one or more media presentation devices 335. In some examples, the various combinations of vehicle occupants may not select the one or more media presentations 340 via user devices 305 and may instead engage with the media control device 315 directly (e.g., via one or more user interfaces 320 of the media control device 315) to select the one or more media presentations 340.

In some examples, the one or more processors 202 may receive a second control signal from a second user device 305 operated by a second occupant of the vehicle, where the second control signal initiates a second media presentation 340. In some examples, the first occupant of the vehicle is a crew member and the second occupant of the vehicle is a pilot. In some examples, the control signal is received from the user interface 320 of the media control device 315. In some examples, receiving the control signal that initiates the media presentation 340 is based on one or more vehicle-based criterion being satisfied. In some examples, the one or more vehicle-based criterion includes one or more of a vehicle occupancy criterion, a vehicle location criterion, a vehicle motion criterion, and a vehicle status criterion associated with an itinerary for the vehicle.

In some embodiments, a vehicle-based criterion may be a condition associated with a vehicle. Some examples of vehicle-based criteria may include a vehicle occupancy criterion, a vehicle location criterion, a vehicle motion criterion, a vehicle status criterion, and/or the like. A vehicle occupancy criterion may be satisfied when a vehicle reaches a specific occupancy percentage or when a specific quantity of passengers and/or crew members are onboard a vehicle. A vehicle location criterion may be satisfied when a vehicle is located at a specific location, such as a specific city or a specific airport. Additionally, or alternatively, a vehicle location criterion may be satisfied when a vehicle is in a specific area (e.g., when a vehicle is located at a terminal, when a vehicle is within a specific altitude range, when a vehicle is above or below a specific altitude). A vehicle motion criteria may be satisfied when a vehicle is stopped, when a vehicle is moving, when a vehicle is traveling at specific speed, when a vehicle is traveling with a specific descent rate, when a vehicle is traveling with a specific climb rate, and/or the like. A vehicle status criterion may be satisfied when a vehicle has a specific status, such as when a vehicle is taxiing, when a vehicle is in flight, when a vehicle is grounded, and/or the like. Additionally, or alternatively, a vehicle status criterion may be satisfied when one or more parameters associated with a vehicle reaches a specific value. For example, a vehicle status criterion may be satisfied when a vehicle fuel level value reaches a threshold value.

In some examples, outputting the media presentation 340 includes outputting, via the one or more media presentation devices 335, a first song during a first time interval, outputting, via the one or more media presentation devices 335, a second song during a second time interval, and outputting, via the one or more media presentation devices 335, an announcement during a third time interval between the first time interval and the second time interval, where the third time interval is based on user input 345 received via the user interface 320 of the media control device 315. In some embodiments, user input 345 may include information and/or an indication that is provided by a user to a computing device. For example, the selection of a selectable icon by a user may be an example of user input 345. As described herein, user input 345 may include voice input, text input, touchscreen input, and/or other tactile input (e.g., clicking a button, turning a knob). In some examples, a user may provide user input 345 to a media control device 315 via a user interface 320. For example, a user may select a selectable icon, which may cause one or more operations to be performed, such as the presentation of media data 310. In some examples, a user may select one or more icons, which may cause one or more media presentations 340 to be added to a queue (e.g., a current playlist). The user input 345 may include the selection of one or more media presentations 340 to add to a queue and/or one or more locations of the one or more media presentations 340 within the queue. In some examples, the media presentation 340 causes one or more occupants of the vehicle to perform one or more actions.

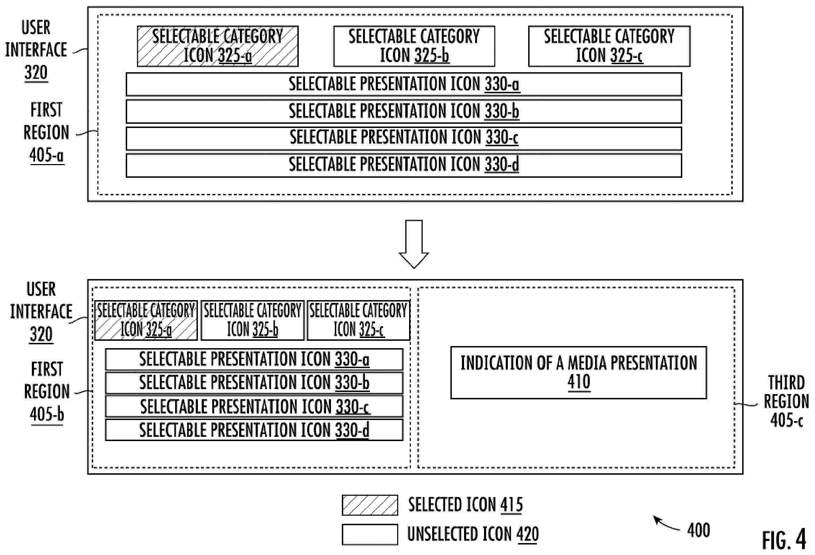

FIG. 4 is a dataflow diagram 400 showing example data structures and modules for managing, selecting, and communicating vehicle-based media presentations in accordance with one or more embodiments of the present disclosure. In some examples, a user interface 320 of a media control device 315 may display (e.g., one or more processors 202 may cause the user interface 320 to display), via a portion of a first region 405-a of the user interface 320, a plurality of selectable category icons 325 representative of a plurality of data categories for the media data 310, the plurality of data categories comprising a song category, an advertisement category, and an announcement category.

In some embodiments, a user interface 320 may include hardware and/or software that is configured to interface with one or more individuals. For example, a user interface 320 may be a device that receives one or more inputs from a user and/or provides one or more outputs to the user, such as a monitor, a display, a speaker, a microphone, a printer, a keyboard, a mouse, a joystick, and/or the like. In some examples, a user interface 320 may be a software application, such as a graphical user interface that is displayed and/or executed on a computing device. In some examples, a user interface 320 may provide an audio and/or visual representation of information. For example, a user interface 320 of a vehicle, such as a display of a flight management system or any other computing device associated with a vehicle, may provide a representation of media data 310 and/or one or more selectable icons corresponding to media categories and/or media presentations 340.

In some embodiments, a data category may be an identifier or classification for data. A data category may indicate or otherwise correspond to a data type. For example, data categories may include any one or more of an audio data category, an image data category, a video data category, a multimedia data category, and a text data category. Additionally, or alternatively, data categories may include any one or more of a song data category, an advertisement data category, and an announcement data category. In some examples, a user interface 320 (e.g., of a media control device 315) may display one or more indications of one or more data categories. For example, a user interface 320 may display three selectable category icons 325, each including text that indicates a respective data category.

In some embodiments, a selectable icon may be a digital representation of a button or a selectable shape, which may be displayed on a user interface 320. A selectable icon may enable one or more individuals to select one or more options, which may cause one or more actions. For example, a user may press a selectable icon on a touchscreen display or click a selectable icon using a cursor, which may initiate one or more actions, such as one or more media presentations 340. In some examples, multiple types of selectable icons may be utilized. For example, selectable category icons 325 may be utilized for the selection of various categories of media data 310. Selectable presentation icons 330 may be utilized for the selection of various media presentations 340.

As described herein, a user interface 320 (e.g., a user interface 320 of a media control device 315) may display a plurality of selectable icons. For example, a user interface 320 may display three selectable category icons 325 for selecting or otherwise representing data categories. Such selectable icons may include a first selectable category icon for a song category (e.g., a music category), a second selectable category icon for an advertisement category, and a third selectable category icon for an announcement category. As described herein, a user may select one of the selectable category icons 325, which may cause one or more selectable presentation icons 330 associated with media data 310 corresponding to a specific category to be displayed. For example, selecting the first selectable category icon for the song category may cause one or more selectable presentation icons 330 to be displayed (e.g., selectable icons representative of specific songs, a list of song selectable icons). Some other examples of selectable icons that may be displayed via a user interface 320 include playlist selection icons, media presentation initiation icons (e.g., play icons), media presentation pause icons, media presentation navigation icons (e.g., rewind icons, fast forward icons), organizational icons (e.g., icons that enable a user to rearrange selectable icons, icons that enable a user to create or organize a playlist, icons that enable a user to add one or more items to a queue), and/or the like.

Although some examples described herein refer to selectable icons, any other type of button or user input 345 element may be utilized to select various options or items displayed on a user interface 320. For example, a user may select one or more songs displayed on a user interface 320 of a media control device 315 using a keypad, a mouse, a button (e.g., a button on a smartwatch, a button on a cell phone), and/or the like.

In some embodiments, a region of a user interface 320 may be a section, division, or subdivision of a user interface 320 that may be used to display specific types of information or data. For example, various embodiments of the present disclosure may involve splitting a user interface 320 into two or more regions, which may be utilized to display different types of information. In some examples, two or more display configurations may be utilized to display information via a user interface 320. For example, a first display configuration may involve utilizing the entirety of the user interface 320 to display information. A second display configuration may be a split screen configuration, where a first half of the user interface 320 is used to display a first type of information and a second half of the user interface 320 is used to display a second type of information (e.g., simultaneously). Accordingly, as described herein, the term "first region 405-a of a user interface" may refer to the entirety of the user interface 320, the term "second region 405-b of a user interface" may refer to a first half of the user interface 320 (e.g., a left half of the user interface 320), and the term "third region 405-c of a user interface" may refer to a second half of the user interface 320 (e.g., a right half of the user interface 320).

As described herein, the user interface 320 may operate in the first display configuration for a first duration and operate in the second display configuration for a second duration. In some examples, a control signal corresponding to a user input 345 may trigger the user interface 320 to switch from the first display configuration to the second display configuration. For example, a user may select a selectable presentation icon 330 representative of a song (e.g., a user may select a song), which may cause the user interface 320 to switch from the first display configuration to the second display configuration. In the first display configuration, the entirety of the user interface 320 (e.g., the first region 405-a) may be utilized to display media data category icons (e.g., a music category icon, an advertisement category icon, an announcement category icon) and media icons (e.g., song icons, advertisement icons, announcement icons) for a selected category. For example, if the music category icon is selected (e.g., selected icon 415), the user interface 320 may display a plurality of song icons representative of individual songs that may be selected by a user. In one illustrative example, when a song is selected, the user interface 320 may switch from the first display configuration to the second display configuration. In the second display configuration, the user interface 320 may be split into two halves (e.g., a left half and a right half, a second region 405-b and a third region 405-c). The first half of the user interface 320 may display the media data category icons and the media presentation icons (e.g., the same icons displayed in the first display configuration, but resized for the split screen configuration and moved to the left half of the display). The right half of the user interface 320 may display information related to the selected media presentation 340 (e.g., the selected song). For example, the right half of the user interface 320 may display a now playing screen.

Some examples described herein may refer to various portions of a user interface 320. In such examples, a portion of a user interface 320 or a portion of a region of a user interface 320 may refer to a specific location or area within a region that is used to display information. For example, a portion of a second region 405-b of the user interface 320 may be a subsection of the second region 405-b (e.g., one or more pixels within the second region 405-b, an area within the second region 405-b).

In some examples, the one or more processors 202 may receive a control signal that initiates a media presentation 340, the media presentation 340 based on the media data 310. In some embodiments, a control signal may be a signal that causes one or more operations or actions to be performed. A control signal may be communicated by one or more devices and/or one or more elements of a device. For example, a control signal may be generated (e.g., by a user interface 320, by one or more processors 202) in response to a user selecting a selectable icon via a user interface 320. In some examples, a control signal may be communicated to one or more processors 202 of the computing device, which may perform one or more actions in response to receiving the control signal, such as initiating one or more media presentations 340. In some examples, the control signal may be generated by and/or transmitted by a processor 202 and/or a user interface 320. As described herein, one or more actions may be performed in response to receiving a control signal. For example, a location of one or more selectable icons may be adjusted based on one or more processors 202 receiving a control signal.

In some embodiments, a media presentation 340 may include media data 310 being provided or communicated to one or more individuals. For example, a media presentation 340 may include displaying image and/or video data via a user interface 320, which may be observed or perceived by one or more individuals, such as one or more passengers of a vehicle. Additionally, or alternatively, a media presentation 340 may include playing audio data using one or more speakers. In some examples, a media presentation 340 may include the presentation of audio data, video data, image data, or any combination thereof. As described herein, a media presentation 340 may be provided or otherwise output by one or more media presentation devices 335.

In some examples, the one or more processors 202 may adjust and/or cause the user interface 320 to adjust a location of the plurality of selectable category icons 325 on the user interface 320 from the portion of the first region 405-a of the user interface 320 to a portion of a second region 405-b of the user interface 320 based on receiving the control signal that initiates the media presentation 340. In some examples, the one or more processors 202 may output, to one or more media presentation devices 335, the media presentation 340 based on receiving the control signal that initiates the media presentation 340.

In some embodiments, a media presentation device 335 may be a device configured to output one or more media presentations 340. In some examples, a media presentation device 335 may be an example of a computing device. A media presentation device 335 may include input/output circuitry, such as one or more speakers, one or more microphones, one or more displays, and/or the like. As described herein, a vehicle may include one or more media presentation devices 335. In some examples, a vehicle may include a plurality of media presentation devices 335 located throughout the vehicle. For example, each seat of a vehicle may include a dedicated (e.g., respective, corresponding) media presentation device 335 so that each passenger may independently view one or more media presentations 340. In an aerospace context, an aircraft may include a plurality of headrest multimedia players, which may be examples of media presentation devices 335.

In some examples, a media presentation device 335 may provide one or more media presentations 340 to one or more occupants of a vehicle. In such examples, the one or more occupants may receive the one or more media presentations 340 and perform one or more actions in response to receiving the one or more media presentations 340. For example, a passenger of a vehicle may hear an audio announcement that is output by a media presentation device 335. The audio announcement may be an audio recording of a safety presentation, which may include one or more audio descriptions of one or more safety procedures. In such examples, a passenger of a vehicle may hear the audio announcement and perform the one or more safety procedures (e.g., buckling a seatbelt, securing luggage), which may improve passenger safety.

In some examples, the one or more processors 202 may cause the user interface 320 to display the plurality of selectable category icons 325 via the portion of the second region 405-b based on receiving the control signal. Additionally, or alternatively, the one or more processors 202 may cause the user interface 320 to display an indication of the media presentation 410 via a portion of a third region 405-c of the user interface 320 based on receiving the control signal, where the second region 405-b of the user interface 320 includes a first half of the user interface 320 and the third region 405-c of the user interface 320 includes a second half of the user interface 320.

In some embodiments, an indication of a media presentation 410 may be a representation of a media presentation 340 that has been selected or a media presentation 340 that is currently being output by one or more media presentation devices 335. For example, an indication of a media presentation 410 may include an image or a visual representation indicating a song, an advertisement, or an announcement that is currently playing.

In some examples, the one or more processors 202 may cause the user interface 320 to display, via a second portion of the second region 405-b, a plurality of selectable presentation icons 330 corresponding to a selected icon 415 of the plurality of selectable category icons 325 (e.g., while one or more other icons are not selected, unselected icons 420). In some examples, receiving the media data 310 from the user device 305 includes receiving the media data 310 via a secure communication network associated with the vehicle. In some embodiments, a secure communications network may be an access-controlled communication network. For example, a secure communication network may be a private communication network, which may be utilized if a user enters a specific password and/or specific credentials that grant access to the communication network. In some examples, a secure communication network may be associated with a vehicle. For example, a vehicle may include one or more hardware components, which may enable secure communications between two or more devices (e.g., computing devices) associated with the vehicle.

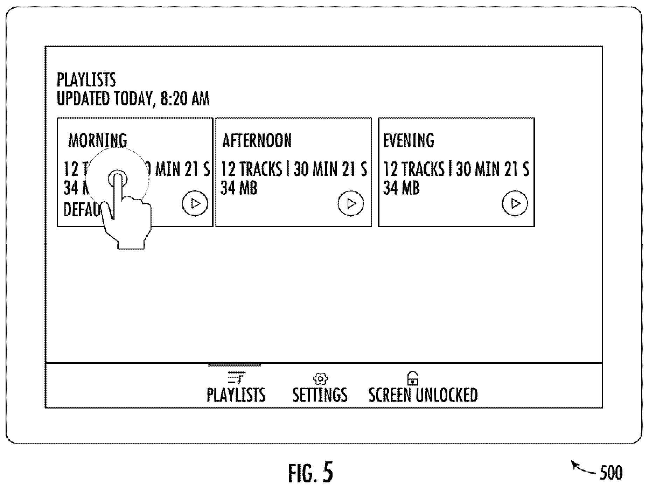

FIG. 5 is an operational example 500 of a user interface that supports managing, selecting, and communicating vehicle-based media presentations in accordance with one or more embodiments of the present disclosure. For example, the user interface may provide a plurality of selectable icons that enable one or more individuals to select one or more playlists (e.g., one or more groupings of media data compiled by one or more individuals, such as one or more content curators). As shown, the user interface may include a first playlist selectable icon (e.g., for a morning playlist), a second playlist selectable icon (e.g., an afternoon playlist), a third playlist selectable icon (e.g., an evening playlist), a first navigation selectable icon (e.g., enabling navigation to the presently displayed playlist screen), a second navigation selectable icon (e.g., enabling navigation to a settings screen), and a third navigation selectable icon (e.g., enabling one or more individuals to lock and unlock the screen). As described herein, the user interface may be an example of a display of a media control device or a user device.

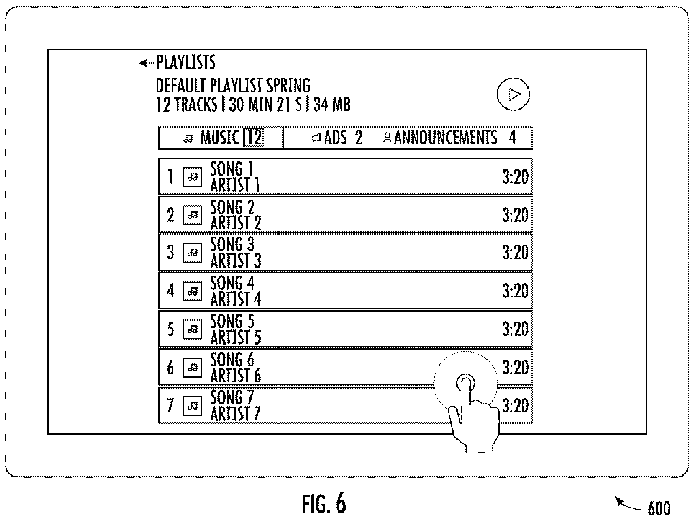

FIG. 6 is an operational example 600 of a user interface that supports managing, selecting, and communicating vehicle-based media presentations in accordance with one or more embodiments of the present disclosure. For example, the user interface may provide a plurality of selectable icons that enable one or more individuals to select one or more media presentations and/or one or more media categories. As shown, the user interface may include a first selectable category icon (e.g., for a music category), a second selectable category icon (e.g., for an advertisement category), a third selectable category icon (e.g., for an announcement category), and a plurality of selectable presentation icons (e.g., for a plurality of music media presentations).

As described herein, one or more individuals may select a selectable category icon, which may cause corresponding selectable presentation icons to be displayed. For example, selecting the advertisement selectable category icon may cause one or more advertisement media presentation selectable icons to be displayed below the advertisement selectable category icon. Additionally, or alternatively, the selection of a media presentation (e.g., a song, an advertisement, an announcement) may cause the media presentation to be presented via one or more media presentation devices. Additionally, or alternatively, the selection of the media presentation icon may cause one or more characteristics of the user interface to change. For example, the user interface may transition to display one or more features described with reference to the operational example 700.

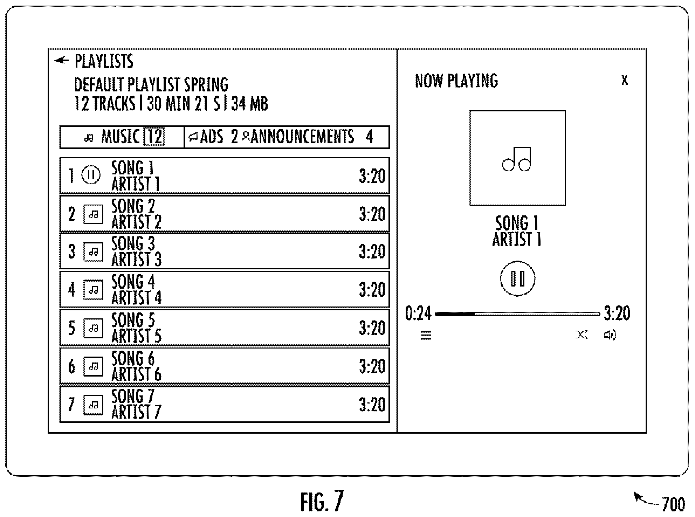

FIG. 7 is an operational example 700 of a user interface that supports managing, selecting, and communicating vehicle-based media presentations in accordance with one or more embodiments of the present disclosure. For example, the user interface may provide a plurality of selectable icons that enable one or more individuals to select one or more media presentations, one or more media categories, and/or one or more media presentation options (e.g., play, pause, shuffle, add to queue, adjust volume). As shown, the user interface may include a first selectable category icon (e.g., for a music category), a second selectable category icon (e.g., for an advertisement category), a third selectable category icon (e.g., for an announcement category), and a plurality of selectable presentation icons (e.g., for a plurality of music media presentations). Additionally, or alternatively, the user interface may include a plurality of selectable navigation icons (e.g., play, pause, shuffle, add to queue, adjust volume). As shown, the user interface may display a split screen configuration. One region of the user interface (e.g., a left half) may display selectable category icons and selectable presentation icons and another region of the user interface (e.g., a right half) may display a now playing screen.

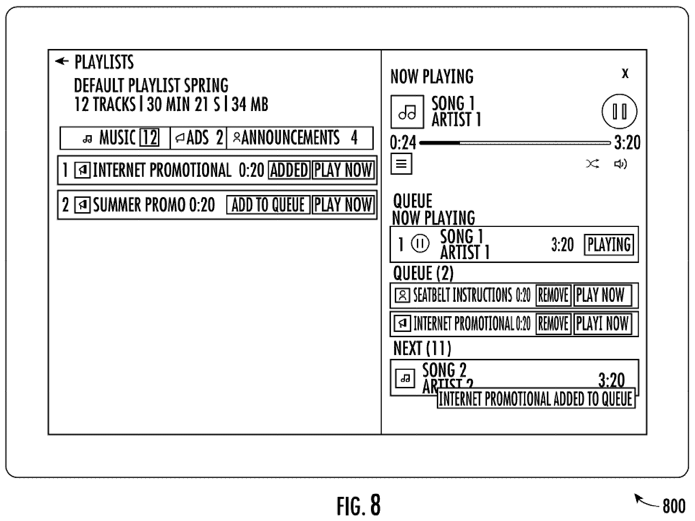

FIG. 8 is an operational example 800 of a user interface that supports managing, selecting, and communicating vehicle-based media presentations in accordance with one or more embodiments of the present disclosure. For example, the user interface may provide a plurality of selectable icons that enable one or more individuals to select one or more media presentations, one or more media categories, and/or one or more media presentation options (e.g., play, pause, shuffle, add to queue, adjust volume). As described herein, one or more individuals may select an "add to queue" selectable icon for a respective media presentation, which may place the respective media presentation in a queue of media presentations. In such examples, a region of the user interface, such as a right half of the user interface, may display the queue (e.g., in response to the one or more individuals selecting the "add to queue" selectable icon).

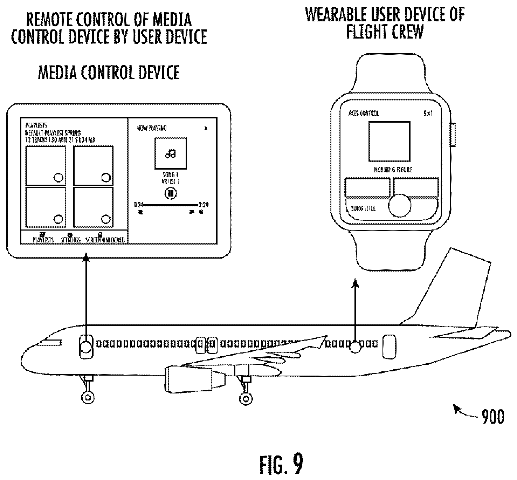

FIG. 9 is an operational example 900 of a system architecture that supports managing, selecting, and communicating vehicle-based media presentations in accordance with one or more embodiments of the present disclosure. For example, the system architecture may include a vehicle, such as a commercial aircraft, a media control device of the vehicle, and a user device, such as a smartphone or a wearable device of a flight crew member. In some examples, the user device may be in communication with the media control device (e.g., via a communication network of the vehicle, such as a Wi-Fi network of the vehicle). In such examples, a flight crew member may select one or more selectable icons displayed via a user interface of the user device, which may result in one or more operations being performed by the media control device. For example, the flight crew member may select a song and/or a playlist via the user device, the user device may transmit one or more signals to the media control device indicating the one or more selections, and the media control device may perform one or more actions in response to receiving the signal. For example, the media control device may cause one or more media presentation devices to play one or more songs in response to receiving the one or more signals.

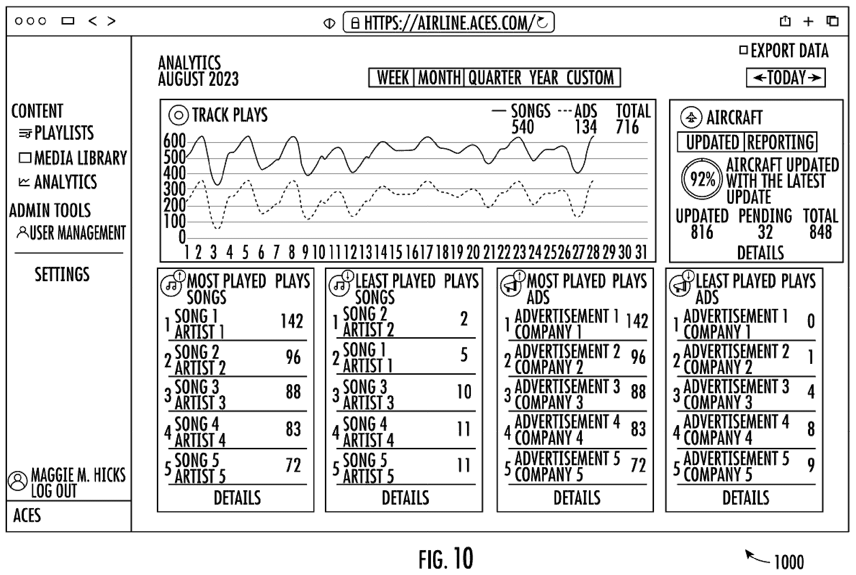

FIG. 10 is an operational example 1000 of a user interface that supports managing, selecting, and communicating vehicle-based media presentations in accordance with one or more embodiments of the present disclosure. For example, the user interface may provide statistical information associated with the operation of a media control device. The statistical information may include a graph showing track play quantities (e.g., media presentation quantities) over time, a most played song list, a least played song list, a most played ad list, a least played ad list, a most played announcement list, a least played announcement list, an update status indicator, a reporting status indicator, or any combination thereof. In some examples, the user interface may include a plurality of selectable icons, which may enable one or more individuals to select various types of statistical information for display.

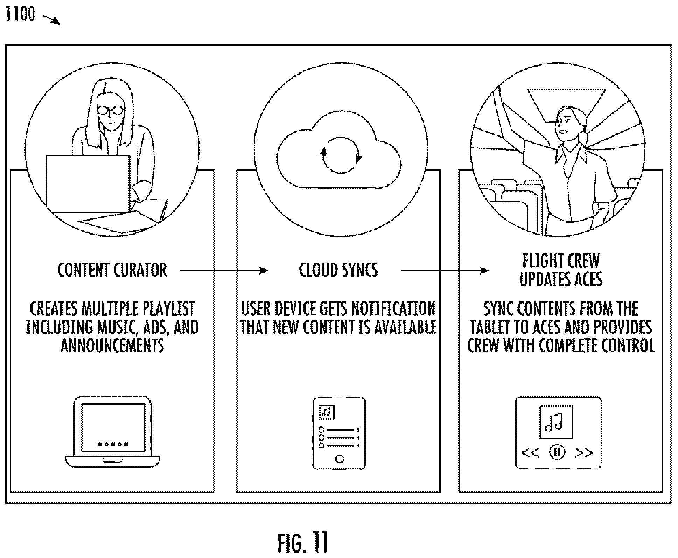

FIG. 11 is an operational example 1100 of a process that supports managing, selecting, and communicating vehicle-based media presentations in accordance with one or more embodiments of the present disclosure. The process may include, at a first time instance, creating one or more playlists that each include music, advertisements, announcements, or any combination thereof. In some examples, a content curator may create the one or more playlists. The process may include, at a second time instance, performing a synchronization operation, such as a cloud-based synchronization operation that provides the one or more playlists to one or more user devices. For example, one or more user devices may periodically perform the synchronization operation, and/or perform the synchronization operation in response to user input. The process may include, at a third time instance, updating a media control device (e.g., an ACES system) with the one or more playlists loaded on the one or more user devices. For example, a flight crew member may initiate a media upload operation that uploads the one or more playlists from a user device to the media control device.

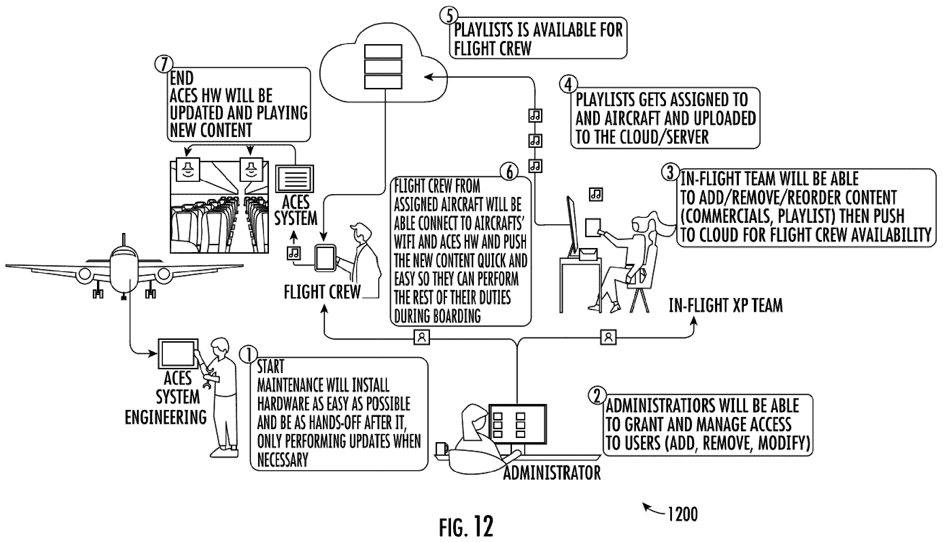

FIG. 12 is an operational example 1200 of a process that supports managing, selecting, and communicating vehicle-based media presentations in accordance with one or more embodiments of the present disclosure. The process may include one or more operations performed by one or more devices and/or one or more individuals at one or more time instances. For example, at a first time instance (e.g., at step 1), hardware may be installed on a vehicle. For example, a maintenance technician may install one or more components of an ACES (e.g., one or more media control devices, one or more user devices). At a second time instance (e.g., at step 2), access and/or permission may be granted for one or more users to operate or otherwise utilize one or more features of the systems described herein. For example, an administrator may modify an ACES user list (e.g., add one or more users, remove one or more users, and/or the like). As described herein, adding one or more users to a user list may enable the one or more users to perform various actions, such as selecting media presentations, uploading media data to a media control device, creating playlists, modifying playlists, and/or the like.

At a third time instance (e.g., at step 3), media data (e.g., content) may be selected for providing (e.g., uploading) to one or more media control devices and/or provided to a cloud-based storage location that is accessible by the one or more media control devices. For example, an in-flight team member (e.g., a content curator) may generate a playlist and push the playlist to the cloud for availability on one or more media control devices. At a fourth time instance (e.g., at step 4), media data may be assigned to one or more vehicles. For example, an in-flight team member may select one or more aircraft to upload one or more playlists to. In some examples, media data may be assigned to one or more vehicles by vehicle type or a fleet identifier.

At a fifth time instance (e.g., at step 5), media data may be made available via the cloud. For example, one or more playlists may be available via a cloud-based storage location. At a sixth time instance (e.g., at step 6), media data may be pushed to one or more media control devices. For example, a flight crew member may utilize a user device (e.g., an iPad, a wearable, a smartphone, a laptop) to select media data from the cloud and download the media data to the one or more media control devices. At a seventh time instance (e.g., at step 7), one or more media control devices may receive the selected media data and/or perform one or more media presentations of the selected media data. For example, one or more media presentation devices may play one or more songs in response to a flight crew member selecting the one or more songs via a media control device or a user device.

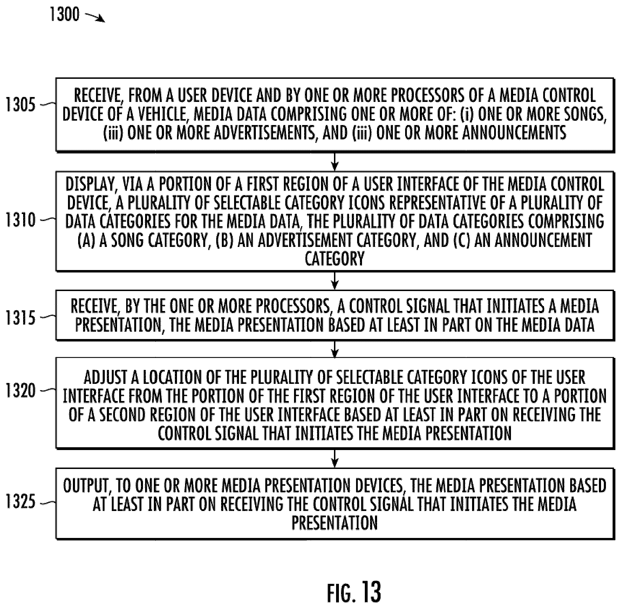

FIG. 13 illustrates a process 1300 for managing, selecting, and communicating vehicle-based media presentations in accordance with one or more embodiments of the present disclosure. Specifically, FIG. 13 depicts operations of an example process 1300. In some embodiments, the process 1300 is embodied by computer program code stored on a non-transitory computer-readable storage medium of a computer program product configured for execution to perform the process as depicted and described. Additionally, or alternatively, in some embodiments, the process 1300 is performed by at least one specially configured computing device, such as at least one computing device 200 alone or in communication with at least one other component, device, system, and/or the like. In this regard, in some such embodiments, the computing device 200 is specially configured by computer-coded instructions (e.g., computer program instructions) stored thereon, for example in the memory 204 and/or another component depicted and/or described herein and/or otherwise accessible to the computing device 200, for performing the operations as depicted and described. In some embodiments, the computing device 200 is in communication with at least one external apparatus, system, device, and/or the like, to perform at least one of the operations as depicted and described. For example, the computing device 200, in some embodiments, is in communication with an external computing device, a client device, and/or the like. For purposes of simplifying the description, the process 1300 is described as performed by and from the perspective of the computing device 200.

The process 1300 begins at operation 1305. At operation 1305, the computing device 200 includes means such as the sensors 210, navigation circuitry 212, flight operations circuitry 214, virtual management circuitry 216, communications circuitry 208, input/output circuitry 206, one or more processors 202, or a combination thereof, to receive, from a user device and by one or more processors of a media control device of a vehicle, media data comprising one or more of: (i) one or more songs, (ii) one or more advertisements, and (iii) one or more announcements.

At operation 1310, the computing device 200 includes means such as the sensors 210, navigation circuitry 212, flight operations circuitry 214, virtual management circuitry 216, communications circuitry 208, input/output circuitry 206, one or more processors 202, or a combination thereof, to display, via a portion of a first region of a user interface of the media control device, a plurality of selectable category icons representative of a plurality of data categories for the media data, the plurality of data categories comprising (a) a song category, (b) an advertisement category, and (c) an announcement category.

At operation 1315, the computing device 200 includes means such as the sensors 210, navigation circuitry 212, flight operations circuitry 214, virtual management circuitry 216, communications circuitry 208, input/output circuitry 206, one or more processors 202, or a combination thereof, to receive, by the one or more processors, a control signal that initiates a media presentation, the media presentation based at least in part on the media data.

At operation 1320, the computing device 200 includes means such as the sensors 210, navigation circuitry 212, flight operations circuitry 214, virtual management circuitry 216, communications circuitry 208, input/output circuitry 206, one or more processors 202, or a combination thereof, to adjust a location of the plurality of selectable category icons on the user interface from the portion of the first region of the user interface to a portion of a second region of the user interface based at least in part on receiving the control signal that initiates the media presentation.

At operation 1325, the computing device 200 includes means such as the sensors 210, navigation circuitry 212, flight operations circuitry 214, virtual management circuitry 216, communications circuitry 208, input/output circuitry 206, one or more processors 202, or a combination thereof, to output, to one or more media presentation devices, the media presentation based at least in part on receiving the control signal that initiates the media presentation.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

In some embodiments, some of the operations above may be modified or further amplified. Furthermore, in some embodiments, additional optional operations may be included. Modifications, amplifications, or additions to the operations above may be performed in any order and in any combination.

Although an example processing system has been described above, implementations of the subject matter and the functional operations described herein can be implemented in other types of digital electronic circuitry, or in computer software, firmware, or hardware, including the structures disclosed in this specification and their structural equivalents, or in various combinations.

Embodiments of the subject matter and the operations described herein can be implemented in digital electronic circuitry, or in computer software, firmware, or hardware, including the structures disclosed in this specification and their structural equivalents, or in various combinations. Embodiments of the subject matter described herein can be implemented as at least one computer program, i.e., at least one module of computer program instructions, encoded on computer storage medium for execution by, or to control the operation of, information/data processing apparatus. Alternatively, or in addition, the program instructions can be encoded on an artificially generated, propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination. Moreover, while a computer storage medium is not a propagated signal, a computer storage medium can be a source or destination of computer program instructions encoded in an artificially generated, propagated signal. The computer storage medium can also be, or be included in, at least one separate physical component or media (e.g., multiple CDs, disks, or other storage devices).

The operations described herein can be implemented as operations performed by an information/data processing apparatus on information/data stored on at least one computer-readable storage device or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or any combination thereof. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., at least one script stored in a markup language document), in a single file dedicated to the program in question, or in multiple coordinated files (e.g., files that store at least one module, subprogram, or portion of code). A computer program can be deployed to be executed on one computer or on multiple computers that are located at one site or distributed across multiple sites and interconnected by a communication network.

The processes and logic flows described herein can be performed by at least one programmable processor executing at least one computer program to perform actions by operating on input information/data and generating output. Processors suitable for the execution of a computer program include, by way of example, both general and special purpose microprocessors, and any processor of any kind of digital computer. Generally, a processor will receive instructions and information/data from a read-only memory or a random access memory or both. The essential elements of a computer are a processor for performing actions in accordance with instructions and at least one memory device for storing instructions and data. Generally, a computer will also include, or be operatively coupled to receive information/data from or transfer information/data to, or both, at least one mass storage device for storing data, e.g., magnetic, magneto-optical disks, or optical disks.

However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of at least one such back-end, middleware, or front-end components. The components of the system can be interconnected by any form or medium of digital information/data communication, e.g., a communication network. Examples of communication networks include a local area network ("LAN") and a wide area network ("WAN"), an inter- network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, at least one feature from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method comprising:
receiving, from a user device and by one or more processors of a media control device of a vehicle, media data comprising one or more of: (i) one or more songs, (ii) one or more advertisements, and (iii) one or more announcements;
displaying, via a portion of a first region of a user interface of the media control device, a plurality of selectable category icons representative of a plurality of data categories for the media data, the plurality of data categories comprising (a) a song category, (b) an advertisement category, and (c) an announcement category;
receiving, by the one or more processors, a control signal that initiates a media presentation, the media presentation based at least in part on the media data;
adjusting a location of the plurality of selectable category icons on the user interface from the portion of the first region of the user interface to a portion of a second region of the user interface based at least in part on receiving the control signal that initiates the media presentation; and
outputting, to one or more media presentation devices, the media presentation based at least in part on receiving the control signal that initiates the media presentation.

2. The method of claim 1, further comprising:
displaying the plurality of selectable category icons via the portion of the second region based at least in part on receiving the control signal; and
displaying an indication of the media presentation via a portion of a third region of the user interface based at least in part on receiving the control signal, wherein the second region of the user interface comprises a first half of the user interface and the third region of the user interface comprises a second half of the user interface.

3. The method of claim 2, further comprising:
displaying, via a second portion of the second region, a plurality of selectable presentation icons corresponding to a selected category icon of the plurality of selectable category icons.

4. The method of claim 1, wherein receiving the media data from the user device comprises receiving the media data via a secure communication network associated with the vehicle.

5. The method of claim 1, wherein the user device comprises (i) a wearable device, (ii) a tablet, or (iii) a cell phone.

6. The method of claim 1, wherein the control signal is received from the user device operated by a first occupant of the vehicle.

7. The method of claim 6, further comprising:
receiving a second control signal from a second user device operated by a second occupant of the vehicle, wherein the second control signal initiates a second media presentation.

8. The method of claim 7, wherein the first occupant of the vehicle is a crew member and the second occupant of the vehicle is a pilot.

9. The method of claim 1, wherein the control signal is received from the user interface of the media control device.

10. The method of claim 1, wherein receiving the control signal that initiates the media presentation is based at least in part on one or more vehicle-based criterion being satisfied.

11. The method of claim 10, wherein the one or more vehicle-based criterion comprise one or more of (i) a vehicle occupancy criterion, (ii) a vehicle location criterion, (iii) a vehicle motion criterion, and (iv) a vehicle status criterion associated with an itinerary for the vehicle.

12. The method of claim 1, wherein outputting the media presentation comprises:
outputting, via the one or more media presentation devices, a first song during a first time interval;
outputting, via the one or more media presentation devices, a second song during a second time interval; and
outputting, via the one or more media presentation devices, an announcement during a third time interval between the first time interval and the second time interval, wherein the third time interval is based at least in part on user input received via the user interface of the media control device.

13. The method of claim 1, wherein the media presentation causes one or more occupants of the vehicle to perform one or more actions.

14. A system comprising:
a user interface; and
one or more processors in communication with the user interface, the one or more processors configured to:
receive, from a user device, media data comprising one or more of: (i) one or more songs, (ii) one or more advertisements, and (iii) one or more announcements;
display, via a portion of a first region of the user interface, a plurality of selectable category icons representative of a plurality of data categories for the media data, the plurality of data categories comprising (a) a song category, (b) an advertisement category, and (c) an announcement category;
receive a control signal that initiates a media presentation, the media presentation based at least in part on the media data;
adjust a location of the plurality of selectable category icons on the user interface from the portion of the first region of the user interface to a portion of a second region of the user interface based at least in part on receiving the control signal that initiates the media presentation; and
output, to one or more media presentation devices, the media presentation based at least in part on receiving the control signal that initiates the media presentation.

15. An apparatus comprising:
one or more processors; and
a memory storing instructions that, when executed by the one or more processors, cause the apparatus to:
receive, from a user device, media data comprising one or more of: (i) one or more songs, (ii) one or more advertisements, and (iii) one or more announcements;
display, via a portion of a first region of a user interface, a plurality of selectable category icons representative of a plurality of data categories for the media data, the plurality of data categories comprising (a) a song category, (b) an advertisement category, and (c) an announcement category;
receive a control signal that initiates a media presentation, the media presentation based at least in part on the media data;
adjust a location of the plurality of selectable category icons on the user interface from the portion of the first region of the user interface to a portion of a second region of the user interface based at least in part on receiving the control signal that initiates the media presentation; and
output, to one or more media presentation devices, the media presentation based at least in part on receiving the control signal that initiates the media presentation.
